# EUROPEAN PATENT SPECIFICATION

(11) **EP 3 918 787 B1**
(45) Date of publication and mention of the grant of the patent: **04.11.2026**
(21) Application number: 20708817.0
(22) Date of filing: 28.01.2020
(51) Int. Cl.: H04N 13/307, H04N 13/31, G02B 30/30

(54) **MULTI-FRAME DECOMPOSITION METHOD FOR IMAGE RENDERING ON MULTILAYER DISPLAYS**
MULTIFRAMEZERLEGUNG ZUR BILDWIEDERGABE AUF MEHRSCHICHTIGEN ANZEIGEN
PROCÉDÉ DE DÉCOMPOSITION À TRAMES MULTIPLES POUR UN RENDU D'IMAGE SUR DES AFFICHAGES MULTICOUCHE

(30) Priority: 31.01.2019 US 201962799480 P
(43) Date of publication of application: 08.12.2021
(73) Proprietor: InterDigital Madison Patent Holdings, SAS, 75017 Paris (FR)
(72) Inventor: MAKINEN, Jukka-Tapani, 90500 Oulu (FI); ALAMAKI, Markku, 90570 Oulu (FI)
(74) Representative: AWA Sweden AB
(86) International application number: PCT/US2020/015459
(87) International publication number: WO 2020/160024

(56) References cited:
- US-A1- 2014 063 077
- CAO XUAN ET AL: "Load-balancing multi-LCD light field display", PROCEEDINGS OF SPIE/ IS & T,, vol. 9391, 16 March 2015 (2015-03-16), pages 93910F - 93910F, XP060050693, ISBN: 978-1-62841-730-2, DOI: 10.1117/12.2078366
- GORDON WETZSTEIN ET AL: "Tensor displays", ACM TRANSACTIONS ON GRAPHICS (TOG), 5 August 2012 (2012-08-05), pages 1 - 11, XP055145763, Retrieved from the Internet <URL:http://dl.acm.org/citation.cfm?id=2185576> [retrieved on 20190726], DOI: 10.1145/2185520.2185576
- ZHANG JIAHUI ET AL: "Unified Mathematical Model for Multilayer-Multiframe Compressive Light Field Displays Using LCDs", IEEE TRANSACTIONS ON VISUALIZATION AND COMPUTER GRAPHICS, IEEE SERVICE CENTER, LOS ALAMITOS, CA, US, vol. 25, no. 3, 28 February 2018 (2018-02-28), pages 1603 - 1614, XP011706991, ISSN: 1077-2626, [retrieved on 20190128], DOI: 10.1109/TVCG.2018.2810279
- FELIX HEIDE ET AL: "Cascaded displays", ACM TRANSACTIONS ON GRAPHICS, ACM, NY, US, vol. 33, no. 4, 27 July 2014 (2014-07-27), pages 1 - 11, XP058051935, ISSN: 0730-0301, DOI: 10.1145/2601097.2601120

## Description

### BACKGROUND

Displaying visual information is often achieved by using displays that control the color and luminance of multiple small pixels that emit light to all directions. Information about three-dimensional scenes on such displays is usually represented as a single 2D-image projection of the 3D scene. This may not be the optimal way to view a 3D scene. Although multiple display paradigms exist that improve the visual experience, it may be argued that the best visual experience would be produced by a display that may produce any arbitrary distribution of luminance and color as a function of position and viewing direction. This luminance distribution is often called a light field, or the plenoptic function. A light field display with sufficient accuracy may be able to display a synthetic light field that is indiscernible from a real one to a human viewer.

The human mind perceives and determines depths of observed objects in part by receiving signals from muscles used to orient each eye. This eye convergence uses simple triangulation method for estimating the object distance. The brain associates the relative angular orientations of the eyes with the determined depths of focus. Eye muscles connected to the single eye lens automatically adjust the lens shape in such a way that the eye is focused to the same distance to which the two eyes are converged. Correct retinal focus cues give rise to a natural image blur on objects outside of an observed focal plane and a natural dynamic parallax effect. In a natural setting, both the eye convergence and retinal focus cues are coherent. Correct retinal focus cues may call for very high angular density light fields which may involve certain challenges to produce (e.g., producing a sufficiently accurate 3D display that is capable of emitting the necessary light rays). In addition, the rendering of the artificial image may call for a high degree of fidelity.

Known solutions may be found in US2014/063077; Zhang Jiahui et al: "Unified Mathematical Model for Multilayer-Multiframe Compressive Light Field Displays Using LCDs", IEEE Transactions on Visualization and Computer Graphics; IEEE Service Center, Los Alamitos, CA, US, vol. 25, no. 3, 28 February 2018; and Felix Heide et al: "Cascaded displays", ACM Transactions on Graphics, ACM, NY, US, vol. 33, no. 4, 27 July 2014.

### SUMMARY

The invention is defined by the appended independent claims, with embodiments being set forth in the appended dependent claims, in the following description and in the drawings. According to the invention a method for rendering a light field using a display device is provided as set out in claim 1.

According to the invention an apparatus for rendering a light field is provided as set out in claim 13.

### BRIEF DESCRIPTION OF THE DRAWINGS

FIG. 2 is a schematic perspective view illustrating an example multidirectional pixel of a pinhole-based light field display according to some embodiments.
FIG. 3A is a schematic plan view illustrating an example light field display, with two SLMs and a backlight (BL) module, forming a voxel using only two rays according to some embodiments.
FIG. 3B is a schematic plan view illustrating an example light field display, with two SLMs and a BL module, forming a voxel using more than two rays according to some embodiments.
FIG. 4A is a schematic plan view illustrating an example light field display with two SLMs forming a voxel using crossing beams having a thickness and a divergence according to some embodiments.
FIG. 4B is a schematic plan view illustrating an example light field display with two SLMs forming a voxel using light ray scattering according to some embodiments.
FIG. 5A is a schematic plan view illustrating an example light field display structure with an SLM and a directional backlight according to some embodiments.
FIG. 5B is a schematic plan view illustrating an example light field display structure with an SLM, a directional backlight, and a beam-splitting element according to some embodiments.
FIG. 6A is a schematic plan view illustrating an example display structure that includes a refractive element according to some embodiments.
FIG. 6B is a schematic plan view illustrating an example display structure that includes a beam splitting element according to some embodiments.
FIG. 7 is a flowchart illustrating an example optimization process according to some embodiments.
FIG. 8A is a schematic plan view illustrating an example display structure based on single path propagation according to some embodiments.
FIG. 8B is a schematic plan view illustrating an example display structure based on multipath propagation according to some embodiments.
FIG. 9 is a schematic plan view illustrating an example of diffraction generating multiple paths according to some embodiments.
FIG. 10 is a line graph illustrating a convergence for each of three optimization methods according to some embodiments.
FIG. 11 is a bar graph comparing the performance of three optimization methods according to some embodiments.

The entities, connections, arrangements, and the like that are depicted in-and described in connection with-the various figures are presented by way of example and not by way of limitation.

### DETAILED DESCRIPTION

### 3D Image Perception and Different 3D Display Types

Multiple different optical methods exist that could be used to create a light field display. These methods may include, for example, electroholography, integral imaging, parallax barriers, and beam redirection. In electroholography, dense spatial light modulators (SLMs) are used to modulate coherent monochromatic light, which creates the light field as a wavefront. In integral imaging, a microlens array is placed in front of a 2D display. This divides the resolution of the underlying display to spatial and angular domains. In parallax barrier methods, an array of static pinholes or slits is used to selectively block light. Dynamic barriers also may be used, which are usually implemented with an SLM, or multiple stacked SLMs. Parallax barrier displays also may include time multiplexing by displaying multiple different patterns (usually called frames) on the SLMs, so that the frames get integrated together due to persistence of vision. In beam redirection methods, beams of light are time sequentially scanned while their intensity is modulated. This method may be implemented for example with a directional backlight whose intensity is modulated by an SLM. Alternatively, it may be implemented by having an array of intensity-controlled beam generators combined with a beam redirection method.

The vergence-accommodation conflict (VAC) is a determined driver for moving from the current stereoscopic 3D displays based on integral imaging to the more advanced high angular resolution light field systems. A high-quality 3D light field display should be able to produce both the correct eye convergence and retinal focus cues simultaneously without VAC. In conventional stereoscopic multiview displays, image points lie on a surface of a display and only two illuminated pixels (one visible for each eye) are used in representing a 3D point. This method uses eye convergence for creation of the 3D visual effect, but it is not capable of producing the correct retinal focus cues as the angular density of the emitted light field is not high enough.

One type of 3D display capable of providing correct focus cues uses volumetric display techniques that may produce 3D images in true 3D space. Each voxel of a 3D image is located physically at the spatial position where it is supposed to be and reflects or emits light from that position toward the observers to form a real image in the eyes of viewers. Problems with 3D volumetric displays include their low resolution, large physical size and expensive manufacturing costs. These issues may make them too cumbersome to use outside of special cases e.g., product displays, museums, shows, etc. Another type of 3D display device capable of providing correct retinal focus cues is the holographic display. Holographic displays aim to reconstruct whole light wavefronts scattered from objects in natural settings. A problem with this technology is the lack of suitable Spatial Light Modulator (SLM) components that could be used in the creation of the extremely detailed wavefronts.

### Image Rendering with Stacked Parallax Barrier Displays

A high-resolution light field display may include the use of multiple stacked spatial light modulators (SLM). A single SLM may be used effectively as a parallax barrier that selectively blocks the underlying light emitting pixels from viewers sight. The parallax barrier is used as an angular filter that allows the pixels to be visible only from some specific directions. By stacking multiple SLMs on top of each other, the angular resolution may be increased further and a true LF display may be constructed with hardware that also may be made relatively thin. The main negative effects of using a SLM stack are the reduced illumination efficiency leading to high energy consumption and higher computational load coming from the complex display control optimization calculations used for image rendering.

If parallax barrier displays incorporating multiple stacked SLMs are used, the task of selecting the frames to display on each of the SLMs is usually a complex optimization task. Multiple different methods exist for this optimization task, and which method is effective depends on the structure of the display. For some embodiments, a display may include a static backlight covered by an SLM and a pinhole array that blocks most light but lets light through some small holes. For some embodiments, the pinhole array may be in front of the SLM.

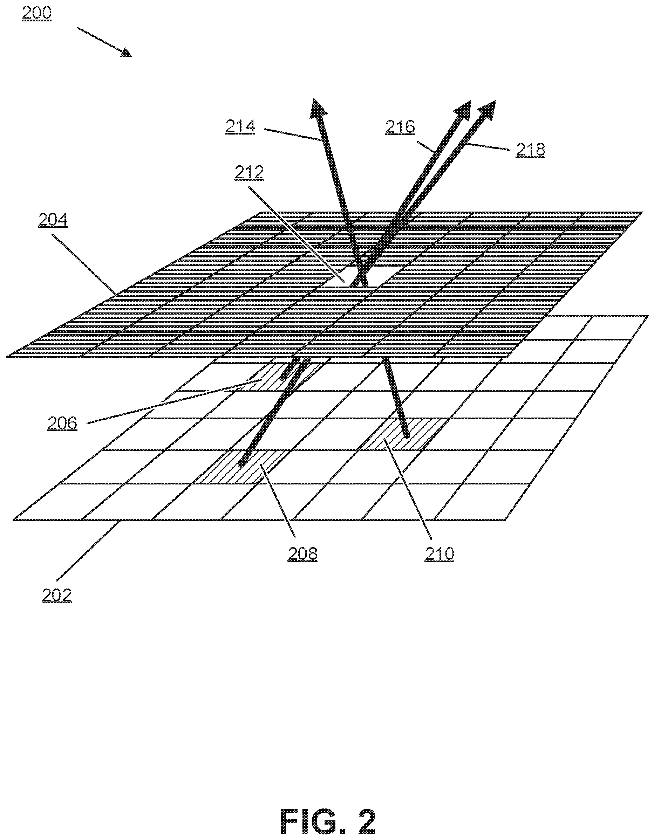

FIG. 2 is a schematic perspective view illustrating an example multidirectional pixel of a pinhole-based light field display according to some embodiments. In some embodiments of a display structure 200, each of the pinholes 212 in a pinhole layer 204, together with the underlying pixels 206, 208, 210 of a pixel layer 202 form a multidirectional pixel (MDP) of light beams 214, 216, 218 as depicted in the figure. Repeating this pattern in both the x and y directions gives the display structure. In this case the optimization may be done, for example, by matching the luminance of the light rays that pass the center points of the pixels to the target light ray intensities.

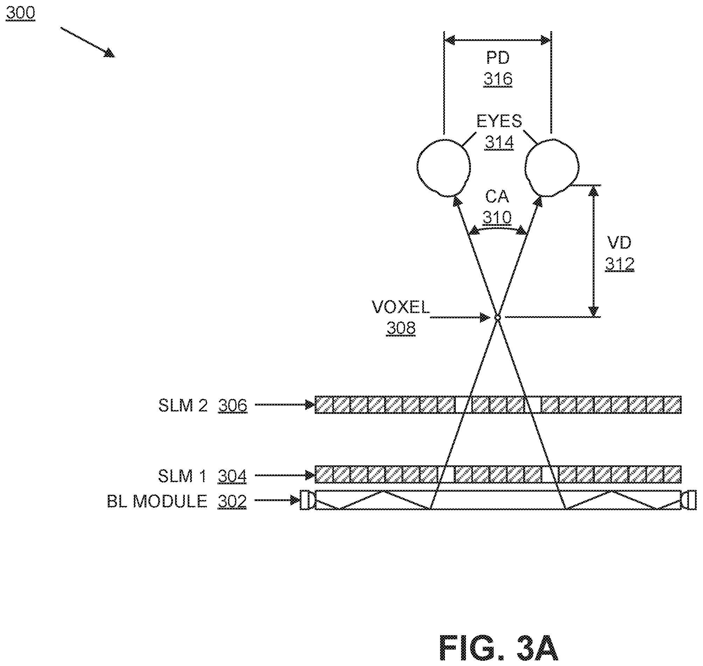

FIG. 3A is a schematic plan view illustrating an example light field display, with two SLMs and a backlight (BL) module, forming a voxel using only two rays according to some embodiments. Light is emitted by a light field display 300 from a backlight (BL) module 302 with two LEDs and a lightguide without coupling structures is used for illuminating the back of the first SLM 304. A voxel 308 is formed between the display and viewer by allowing the light to pass through the right pixels on both modulator layers 304, 306. Correct voxel distance (VD) 312 is perceived when the two passed light rays enter the two eye pupils 314 with the right angles initiating the correct eye convergence angle (CA) 310. The viewer visual system is able to discern the VD 312 from the CA 310 and pupil distance (PD) 316. In this idealized case the parallax barrier mask on SLM 2 and light passing apertures on SLM 1 are easy to calculate from the 3D geometry. In real life, the idealized system is usually too simple, and some physical and human viewer factors are taken into account. For some embodiments, the BL module may include one or more internal optical paths for light to travel between a light emitter and an exit point for light to exit the BL module.

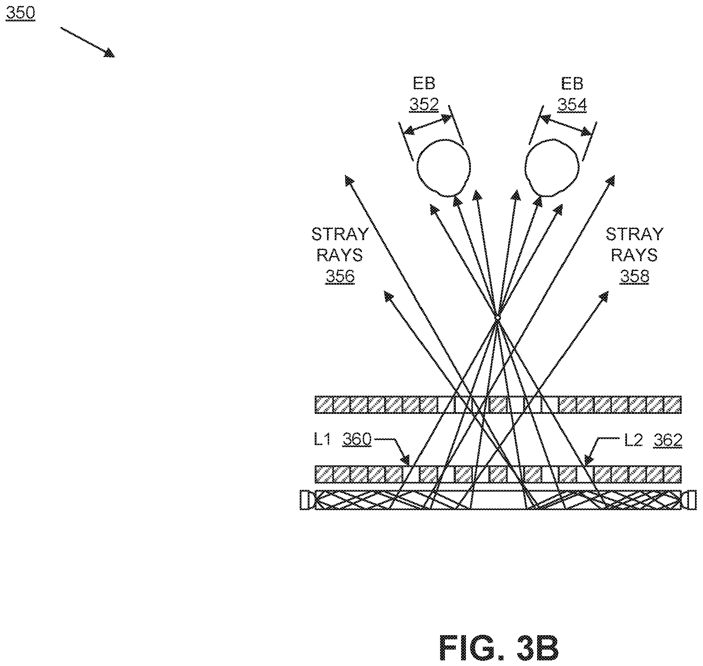

FIG. 3B is a schematic plan view illustrating an example light field display, with two SLMs and a BL module, forming a voxel using more than two rays according to some embodiments. As an example, FIG. 3B presents a light field display 350 where more than two rays are used in single voxel formation using more than two openings on both SLM layers. This example rendering modification may be done for at least two reasons: 1) in order to generate the correct retinal focus cues and 2) in order to make the pixel visible area larger. When a bundle of beams are crossing at the voxel position and enter the pupil of the eye, the retinal image has a sharp focus when the eye lens is adjusted to the correct voxel distance. This way multiple rays may be used for initiating the right retinal focus cues for single eyes. When a human observer looks at an object, the eye is not still, but moves constantly with small rotations called saccades. In addition to this, the whole body and head of a person viewing a display that is not attached in front of the eyes moves. This may call for a certain range around each eye where the image is projected in order to account for the unknown position of the eye pupils. One method to do this in real life systems is to form an eye box (EB) 352, 354 that is wider than the eye pupils allowing eye movement. The suitable size of the eyebox 352, 354 may be determined by the display use case.

For a display that includes two stacked SLMs, one factor adding complexity to image rendering is the fact that there may be multiple ray paths through the pixel openings. As an example, FIG. 3A illustrates stray light rays 356, 358 that propagate through the pixels without crossing at the designated voxel position. Some of these rays may hit eye pupils causing stray light that lowers image contrast. This negative effect may be mitigated by temporal control as the apertures may be opened sequentially and thus avoid creating the wrong ray paths. Creation of proper voxel luminance values also entails control over ray light intensities. In some cases, the SLM 1 pixel transmittances may be adjusted according to the image content. For example, the left and right eye may see the same voxel with different luminance values (L1 (360) vs. L2 (362)) as presented in FIG. 3B.

For some embodiments, a display may include two stacked SLMs in front of a static backlight, the optimization may be more complicated than for only one SLM. One solution is to have the front SLM display form an array of pinholes, whose location is changed for each frame, while the back SLM is optimized in the same way as in the case of static pinholes. An alternative method includes content adaptive parallax barriers (as described in D. Lanman, et al., Content-Adaptive Parallax Barriers: Optimizing Dual-Layer 3D Displays Using Low-Rank Light Field Factorization, 6 ACM TRANSACTIONS ON GRAPHICS 29 (2010) (Article 163)), which optimizes the frames by using nonnegative matrix factorization (NMF), which will find better solutions at the expense of being more computationally intensive.

For some embodiments, a display may include three or more stacked SLMs in front of a static backlight maybe optimized using, e.g., a technique that includes a sparse matrix (described in G. Hironbu, A Multilayer Liquid Crystal Display for Autostereoscopic 3D Viewing, PROC. SPIE 7524: Stereoscopic Displays and Applications XXI, 75240P (2010)); a tomographic method (described in G. Wetzstein, et al., Layered 3D: Tomographic Image Synthesis for Attenuation-based Light Field and High Dynamic Range Displays, 4 ACM TRANSACTIONS ON GRAPHICS 30, (2011) (Article 95)); a direct forcing method (described in X. Cao, et al., Load-Balancing Multi-LCD Light Field Display, PROC. SPIE 9391: STEREOSCOPIC DISPLAYS AND APPLICATIONS XXVI, 93910F (2015)); and a tensor display method (described in G. Wetzstein, et al., Tensor Displays: Compressive Light Field Synthesis Using Multilayer Displays with Directional Backlighting, 31(4) ACM TRANSACTIONS ON GRAPHICS 1-11 (2012)). Of these four methods, the first three (a technique that includes a sparse matrix; a tomographic method; and a direct forcing method) may be suitable for cases where no time multiplexing is used, while the tensor display method may be suitable for time multiplexing. Display methods may also leverage time multiplexing by a load balancing method, e.g., as described in Cao that uses a directional backlight.

Some embodiments improve the ability to render light fields on light field displays based on multiple optical component layers and stacked spatial light modulators. This is achieved by an optimization scheme that allows multiple light propagation paths for each output light ray.

The presented methods enable optimizing image rendering for optical display structures that exhibit real-life physical phenomena, such as light scattering and diffraction. Inclusion of multi-path propagation and real-life beam physical properties improves the 3D light field display image quality.

Some embodiments of systems and methods use light scattering, diffraction, and other real-world physical phenomena to produce higher quality displayed images and reduce display structure complexity for light field displays.

In some embodiments, a sparse light-emitting element array is provided, and a collimating optical layer is provided followed by a diffraction gradient layer that produces multiple copies of a light beam. A spatial light modulator layer is provided, and spatio-temporal control of light illuminating and blocking spatial light modulator layers is provided in a light field display system. In some embodiments, the rendering solution may map a single light illuminating element to more than one light beam in the same or different time epoch.

In some methods of rendering an image to a display, an optical model of a multilayer SLM display system is provided that includes multiple light ray contributions from "adjacent" optical paths/illumination sources. A partitioning is performed of the object function of the optimization problem, which allows for NTF (non-negative tensor factorization) optimization. The light modulation characteristics of the independent light modulating pixels and/or light sources is altered to direct approximately the correct luminance values to the generated voxels, using time multiplexed frames.

### The Tensor Display Method

The tensor display method is based on the observation that the light field of some time-multiplexed multi-SLM displays may be represented as a tensor of rank equal to the number of frames. The target light field that is to be reconstructed is transformed into a similar tensor form, and the difference between the two tensors is then minimized with non-negative tensor factorization (NTF). In the case of only a single-color display, the luminance emitted by the display is given as a function of a position on the display (*x, y*) and the direction (*θ*, *ϕ*). Each set of parameters (*x, y, θ, ϕ*) defines a single light ray. The light field may be expressed as the total luminance in each direction *L*(*x, y, θ, ϕ*). By selecting some set of light rays to represent the light field, the light field may be expressed by a vector, as shown in Eq. 1: ${L}_{i} , i = 1 , … , I .$ Eq. 1

A display may incorporate multiple intensity modulating SLMs placed in front of (or proximate to) a static display. The SLMs are enumerated by the index *n* that runs from 1 to *N.* The transmittance of the *n*^{th} SLM is designated as *T*_{*n*,*h*}, where the index *h* runs from 1 to *H,* enumerating the pixels. For some embodiments, each light ray goes through each of the SLMs once, and the intensity of that light ray is the product of the transmittances of the pixels, as in the following expression of Eq. 2: ${L}_{i} = {\prod }_{n = 1}^{N} {T}_{n , f \left(n, i\right)}$ Eq. 2 where *f*(*n, i)* gives the pixel index of the *n*-th SLM, where the i-th light ray goes through the SLM. Although there could be a constant factor that describes the brightness of the backlight, the backlight brightness has been omitted for simplicity. For example, for two SLMs, a light ray of index 6 may be described using the following expression of Eq. 3: ${L}_{6} = {T}_{1 , 7} {T}_{2 , 8}$ Eq. 3

In this example, the light ray with an index of 6 goes through pixel number 7 of the first SLM and through pixel number 8 of the second SLM. The exact structure of the function *f* depends on the display geometry and pixel layouts.

If time multiplexing is used, the luminances may be expressed as the time averages of the multiplexed frames. The light field may be described using the expression of Eq. 4: ${L}_{i} = \frac{1}{M} {\sum }_{m = 1}^{M} {\prod }_{n = 1}^{N} {T}_{n , m , f \left(n, i\right)}$ Eq. 4 where M is the number of multiplexed frames. Notably, an additional index is incorporated into the transmittance tensor to specify that the transmittances are different in each frame. In order to reproduce a given "target" light field ${L}_{i}^{target}$, it may be useful to minimize the objective function. The objective function is represented as a weighted and squared difference between the target light field and the actual light field, as in the following expression of Eq. 5: ${f}_{obj} \left(T\right) = {\sum }_{i = 1}^{I} {W}_{i} {\left({L}_{i}-{L}_{i}^{target}\right)}^{2} = {\sum }_{i = 1}^{I} {W}_{i} {\left(\frac{1}{M}{\sum }_{m = 1}^{M} {\prod }_{n = 1}^{N} {T}_{n , m , f \left(n, i\right)} - {L}_{i}^{target}\right)}^{2}$ Eq. 5 where *Wᵢ* is an optional weighting factor. Eq. 5 may be optimized (e.g., minimized) using nonnegative tensor factorization (NTF) for some tensor display methods.

In an alternative mathematical formulation, the indexing over all the light rays is changed to multiple indexes over all the SLM pixels, so that each ordered set of pixels (*h*₁*, h*₂, *..., h_{N}*) is summed over all the SLM pixels, where *hₙ* enumerates the pixels in the *n*-th display. This summation may contain more elements than there are in the original summation, since not all ordered sets of pixels have a corresponding light ray. The weight of these "invalid" light rays may be set to zero, so the summation effectively stays the same. In light of this change in indices, the weighing factor *Wᵢ* is replaced by *W*_{*h*₁,*h*₂,...,*hN*} and target light field ${L}_{i}^{target}$ is replaced by ${L}_{{h}_{1} , {h}_{2} , … , {h}_{N}}^{target}$*.* The values of the new objects are determined from the objects that they replace according to direct correspondence between the light ray indices i and the pixel indices *h*₁*, h*₂*, ... , h_{N},* whenever the indices *h*₁*, h*₂, *..., h_{N},* define a valid light ray. When the indices *h*₁*, h*₂, *..., h_{N}* do not define a valid light ray, the weight *W*_{*h*₁*,h*₂*,...,hN*} is zero, and ${L}_{{h}_{1} , {h}_{2} , … , {h}_{N}}^{target}$ is undefined. The resulting objective function is as shown in Eq. 6: ${f}_{obj} \left(T\right) = {\sum }_{{h}_{1} , {h}_{2} , … , {h}_{N}} {W}_{{h}_{1} , {h}_{2} , … , {h}_{N}} {\left(\frac{1}{M}{\sum }_{m = 1}^{M} {\prod }_{n = 1}^{N} {T}_{n , m , {h}_{n}} - {L}_{{h}_{1} , {h}_{2} , … , {h}_{N}}^{target}\right)}^{2}$ Eq. 6 where the summations run over all pixels. This expression may be minimized by using a multiplicative update rule, which is described by the expression of Eq. 7: ${T}_{n , m , {h}_{n}} ← {T}_{n , m , {h}_{n}} \frac{{S}_{{h}_{n}} \left({L}^{target}\right)}{{S}_{{h}_{n}} \left({L}^{real}\right)}$ Eq. 7 where *L^{target}* is the target light field tensor, *L^{real}* is the real (actually produced) light field tensor, and *S_{hₙ}* defines a special weighted summation that runs over all the indices except *hₙ*. Specifically, Eqs. 8 to 10 are shown below: ${\left({L}^{target}\right)}_{{h}_{1} , {h}_{2 ,} … , {h}_{N}} = {L}_{{h}_{1} , {h}_{2} , … , {h}_{N}}^{target}$ Eq. 8 ${\left({L}^{real}\right)}_{{h}_{1} , {h}_{2} , … , {h}_{N}} = \frac{1}{M} {\sum }_{m = 1}^{M} {\prod }_{n = 1}^{N} {T}_{n , m , {h}_{n}}$ Eq. 9 and ${S}_{{h}_{n}} \left(x\right) = {\sum }_{{h}_{1} , {h}_{2} , … , {h}_{n - 1} , {h}_{n + 1} , … , {h}_{N}} {W}_{{h}_{1} , {h}_{2} , … , {h}_{N}} {\prod }_{n = 1}^{N} {T}_{n , m , {h}_{n}} {x}_{{h}_{1} , {h}_{2} , … , {h}_{N}}$ Eq. 10 where *x* is either *L^{target}* or *L^{real}.* The update rule may be intuitively understood by noting that the summations in the nominator and numerator are performed over all the light rays that go through the selected pixel. Therefore, if the real light field has values smaller than the target light field, the denominator has values smaller than the numerator, and the multiplying factor will be greater than one, which means that the pixel transmittance will grow. The weighted summation is used so that all of the light rays are considered when it is decided if the pixel transmittance should be lowered or raised. The update rule is used so that all the pixels in all the time frames of a selected SLM are updated at once, but only one display layer is changed in each update.

The update rule may be computationally expensive, but because the weighing tensor *W*_{*h*₁*,h*₂*,...,hN*} is very sparse, the summation may be programmed to be performed over only the valid light rays, e.g., using the indexing as previously described. This summation may be implemented efficiently as OpenGL commands for at least some display structures.

### Issues Addressed in Some Embodiments

The tensor display method may offer more freedom in selecting display structure than other multi-SLM display optimization methods. For example, refractive elements such as lenses may be placed between the layers. An arbitrary number of stacked SLMs may be used. The method, however, may have some constraints on what kind of display may be used. It may be desirable for a display to satisfy the following three conditions. First, each ray of light that leaves the backlight and exits from the front surface of the display passes each SLM at most once. Second, the SLMs modulate the intensity of the passing light multiplicatively. Finally, for each light ray that exits from the front surface of the display, there is only one optical path from the backlight that contributes to the intensity of that light ray.

One physical feature that may lower the image quality of small-scale displays is diffraction. Diffraction may not be accounted for with idealized ray rendering algorithms. The term diffraction refers to various phenomena that occur when a wave (of light) encounters an obstacle or a slit. It may be described as the bending of light around the corners of an aperture into the region of geometrical shadow. Diffraction effects may be found in all imaging systems and may not be removed even with a perfect lens design that is able to balance out all optical aberrations. In fact, a lens that is able to reach the highest optical quality is often called "diffraction limited" because most of the blurring remaining in the image comes from diffraction. The angular resolution achievable with a diffraction limited lens may be calculated from the formula sin θ = 1.22 * λ / D , where λ is the wavelength of light and D the diameter of the entrance pupil of the lens. The same applies to, e.g., SLMs where the pixel aperture generates a diffraction pattern that causes stray light . It may be seen from the equation that the color of light and aperture size have a significant influence on the amount of diffraction.

The tensor display conditions limit the design space of displays on which image rendering may be optimized using the tensor display method. Because only one optical path is assumed to contribute to each light ray, other potential contributions to the intensity will be ignored by this optimization method. For example, it could be that due to the small size of the pixels, the light rays do not behave as perfect geometric light rays but are diffracted slightly. This may effectively cause the light rays to bend to random directions in the pixel aperture and in turn cause multiple optical paths to be present. In this case, the third condition above does not apply. Overall, the tensor display method assumes ideal light rays that e.g. do not have thickness like the real-life light beams that are generated with real life light sources and optical components. It also implicitly assumes that the light rays experience no diffraction. In many display hardware cases, this may lead to suboptimal performance due to oversimplification of the rendering optimization algorithms. Real life display systems may also exhibit some aberrations from ideal designs that are caused by, e.g., manufacturing tolerances. It may be useful for rendering algorithms to take some of these factors into account. Rendering methods that fail to account for such factors may lead to products that have a lot of performance variation, which may be a very undesirable feature in a high-volume product.

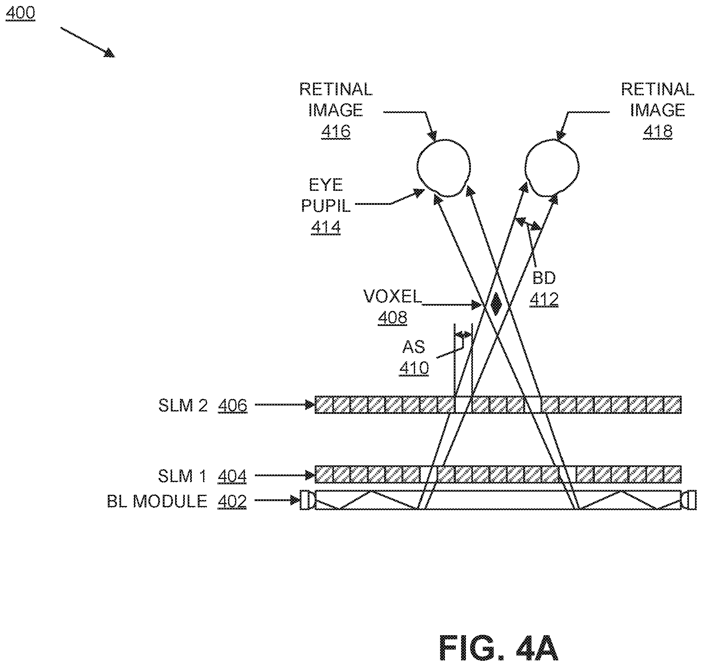

FIG. 4A is a schematic plan view illustrating an example light field display with two SLMs forming a voxel using crossing beams having a thickness and a divergence according to some embodiments. As an example, FIG. 4A presents a display structure 400 with two stacked SLMs 404, 406 such that the tensor display method may be incompatible for sufficiently accurate image render optimization. FIG. 4A depicts a case where light emits from a backlight module 402 and a voxel 408 is formed with two crossing beams that in addition to direction have real physical properties like thickness and divergence. In the example, some of the beam divergence (BD) 412 is caused by diffraction because of the small aperture size (AS) 410 of the second SLM 406. The diverging beams have a cross-section that is not an ideal point in space, but rather a somewhat blurred spot. When this spot is imaged by the eye pupil 414 to the retina as a retinal image 416, 418, the eye pupil acts as the limiting aperture of the whole system if the beam divergence and viewing distance are large enough. The retinal image size depends on factors such as SLM pixel size and eye pupil aperture size. These factors are not accounted for by rendering optimizations calculations that assume ideal light rays.

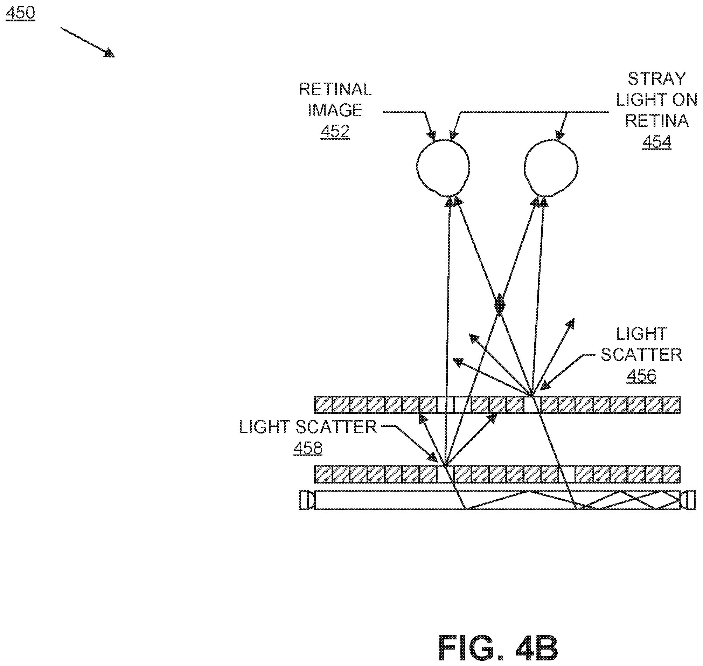

FIG. 4B is a schematic plan view illustrating an example light field display with two SLMs forming a voxel using light ray scattering according to some embodiments. FIG. 4B presents a display structure 450 such that only one eye retinal image 452 is targeted, but due to scattering/diffraction effects 456, 458 from the multiple apertures on both SLM layers, some of the emitted light enters both eye pupils as stray light 454 that lowers contrast of the visible retinal image. This light multipath propagation is also not accounted for in the current tensor display type optimization methods.

Even if the pixel sizes are large enough for diffraction to be ignored, it may be that one would desire to include path multiplying elements, such as beam splitters on purpose, which makes the inclusion of multiple optical paths even more important.

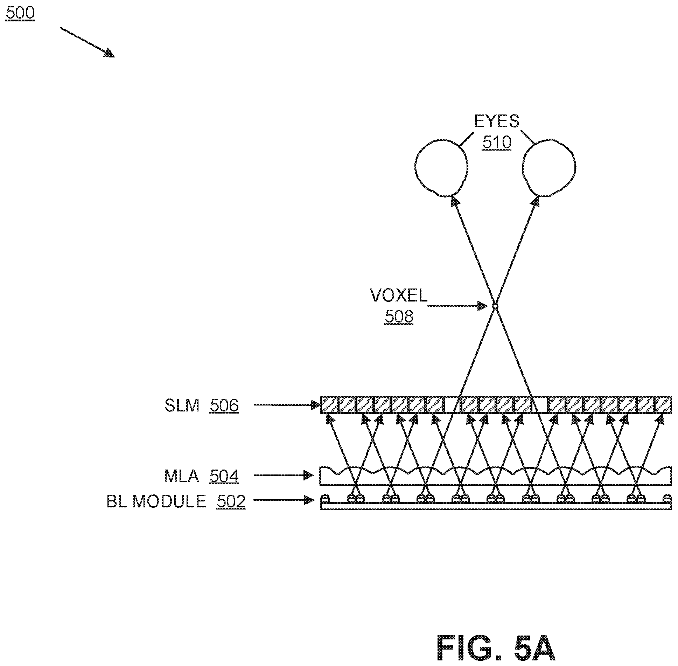

FIG. 5A is a schematic plan view illustrating an example light field display structure with an SLM and a directional backlight according to some embodiments. Directionality for a display structure 500 may be achieved by using an array or a matrix of emitters (such as a backlight module 502) behind a microlens array (MLA) 504. By synchronizing the emitter activation of pixels on the SLM 506, two directional light rays may be generated that cross at the voxel position 508 and initiate the right eye convergence for 3D depth perception by the eyes 510. This structure could be used together with a rendering optimization algorithm similar to the tensor display approach. A benefit of this hardware approach is the increased efficiency and brightness of the display as the light is absorbed only to one SLM. A drawback of this hardware approach is the use of multiple light sources that add cost and complexity to the system. There is also a direct relation between the number of light sources and achievable angular resolution, which may lead to increasing costs in order to improve the system further.

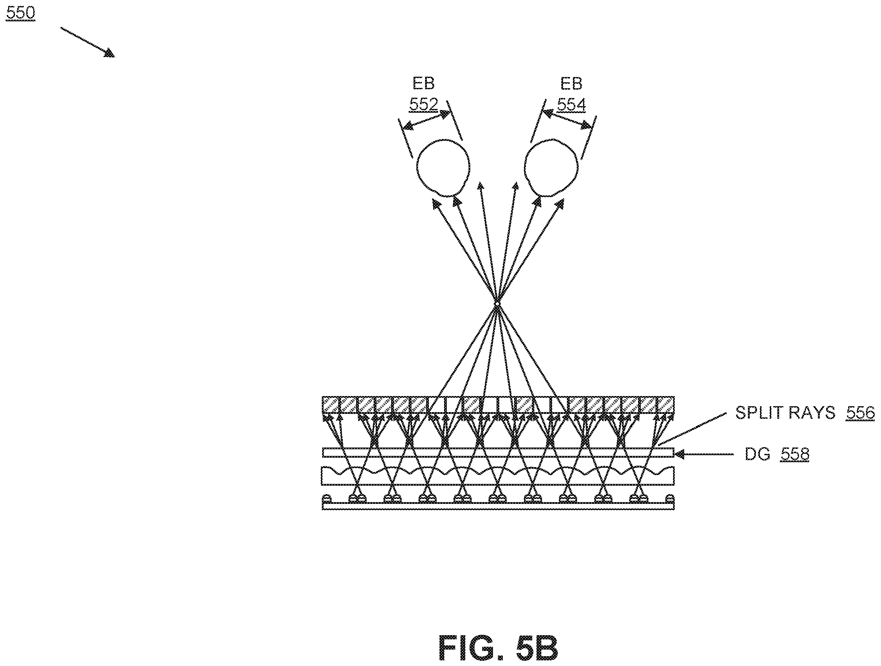

FIG. 5B is a schematic plan view illustrating an example light field display structure with an SLM, a directional backlight, and a beam-splitting element according to some embodiments. One way to improve the directional backlight display structure 550 may include adding a diffraction grating (DG) 558 between the MLA and SLM. As shown in the example, a beam splitting element (e.g., a grating layer 558) creates directional split rays 556 from rays generated in the backlight module thereby adding more projection angles for the light rays. In some embodiments, systems and methods may be used, e.g., for initiating better retinal focus cues or for making a larger eye box (EB) 552, 554 for better usability. The multiple scattering paths in the latter presented display structure may be incompatible with the tensor display method for image rendering optimization. The optimization of multipath light propagation for such display cases may call for new image rendering techniques.

Because the light field produced by a display may have high frequency variation in intensity, a sufficiently accurate representation of the light field may call for dense sampling. In some cases, e.g., if the frequency exceeds the ability of the eye to resolve detail, the high frequency variation may not particularly affect the quality of the display. Thus, it may be useful if the optimization method does not attempt to minimize this high frequency variation at the expense of loss of other quality. If the quality of the light field is considered to be inversely proportional to the squared and integrated difference between the target light field *L^{target}*(*x, y, θ, ϕ*) and the actual generated light field, the high frequency components in the light field that are not visible to the eye will contribute to this quality assessment. A more desirable quality assessment may include filtering out high frequencies before integration.

### Overview of Example Rendering Systems and Methods

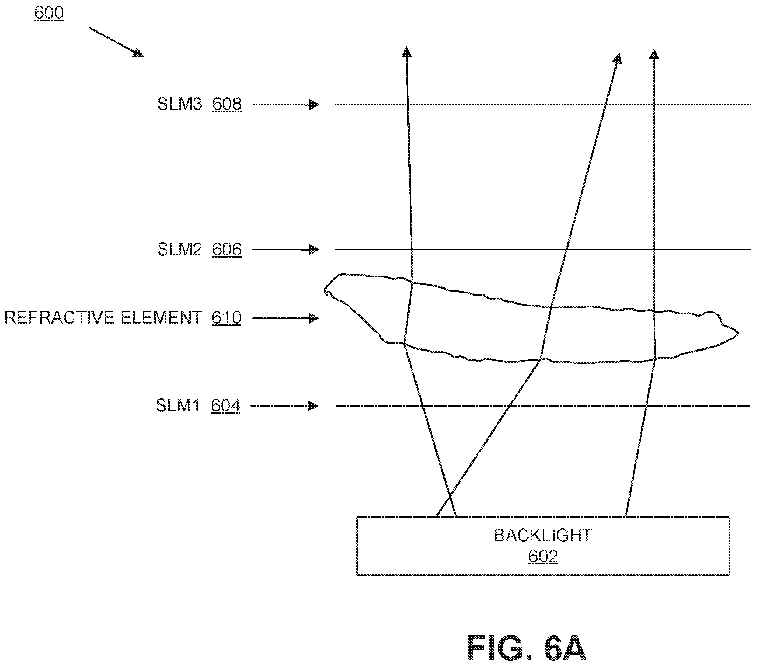

In some embodiments, systems and methods improve the ability to render light fields on light field displays based on multiple optical component layers and stacked spatial light modulators. Some embodiments operate to optimize image rendering for optical display structures that exhibit real-life physical phenomena like light scattering and diffraction. Accounting for multi-path propagation and real-life beam physical properties may improve the 3D light field display image quality. Instead of requiring a single path that contributes to the luminance in a specific direction, the display is allowed to have any number of paths. As depicted in FIGS. 6A-6B, this condition enables the freedom to use beam splitting elements in the display.

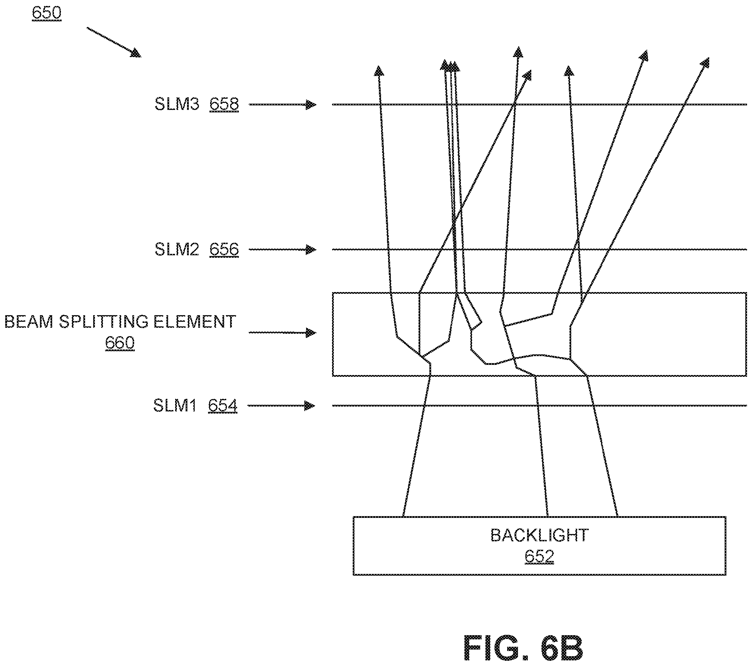

FIG. 6A is a schematic plan view illustrating an example display structure that includes a refractive element according to some embodiments. FIG. 6B is a schematic plan view illustrating an example display structure that includes a beam splitting element according to some embodiments. For a display structure 600 with, e.g., a backlight 602, three SLMs 604, 606, 608, and no beam splitting (which may have a refractive element 610), there is usually only one optical path contribution to each output light ray direction. For a display structure 650 with, e.g., a backlight 652, three SLMs 654, 656, 658, and a beam splitting element 660, there may be multiple optical paths that contribute to same output light ray. For some embodiments, an apparatus may include a plurality of the internal light paths that traverse at least one beam-splitting element. For example, the beam-splitting element may be part of a backlight module or may be separate from the backlight module for some embodiments.

In some embodiments, an image rendering optimization method includes the following. An objective function of optimization is developed for displays that adhere to the multi-path display model. This objective function defines the weighted squared difference (Frobenius norm-squared) between a target light field and the actual time average light field produced by the display. The objective function is substantially minimized in order to produce an approximation of a given light field. An optimization procedure is defined for the objective function. This optimization procedure involves initiating an auxiliary objective function whose minimization is expected to also minimize the original objective function adequately. The auxiliary objective function is substantially optimized using non-negative tensor factorization (NTF).

A potential advantage of presented multi-path rendering method is that, when compared to the tensor display optimization method, this method allows more freedom in defining the structure of the display. Beam splitting elements are allowed in the display, which may be useful for multiple reasons. For example, the light output from the SLM closest to the backlight may be collimated into beams of light by a microlens array. It may be useful to split these beams of light into multiple beams in order to extend the viewing area of the display or to increase the angular or spatial density of the light field. Also, the use of diffusers is possible in the model, as they effectively multiply the paths. Additionally, this model allows the effect of diffraction to be considered in the optimization.

Very high spatial frequency variation of a light field may be undetectable by the eye. Ignoring this variation may be preferable with the multi-path method. Alternatively, two light rays that are almost parallel and overlapping may be considered to be the same. This condition may be implemented by classifying the two light rays as contributions of the same light ray in order to avoid time consuming optimization calculations.

In some embodiments, stray light propagation is accounted for in the image rendering optimization. By considering the physical beam properties, it is possible to estimate the amount of stray light generated by the real physical system generating the light beams that form voxels and retinal images. This may allow for better image optimization than rendering based on idealized ray geometry.

### Example Optimization Methods

In a multi-path display, there may be multiple contributions to each light ray direction. Rather than representing the light intensity in the form of single contributions, e.g., by an expression such as *L*₆ = *T*_{1,7}*T*_{2,8}, the light intensity is represented in some embodiments as a sum of many different contributions such as *L*₆ = *T*_{1,7}*T*_{2,8} + *T*_{1,9}*T*_{2,11} + *T*_{1,13}*T*_{2,23}. The time multiplexed light field may thus be represented by to the following expression of Eq. 11: ${L}_{i} = {\sum }_{p = 1}^{P} \frac{1}{M} {\sum }_{m = 1}^{M} {\prod }_{n = 1}^{N} {c}_{i , p} {T}_{n , m , f \left(n, p, i\right)} = {\sum }_{p = 1}^{P} {L}_{i , p}$ Eq. 11 where:
- the index p enumerates the different optical paths that contribute to an emitted light ray;
- *f*(*n, p, i*) gives the pixel index in *n*^{th} SLM where the *p*^{th} path that contributes to the *i*^{th} light ray goes through the SLM;
- the index *m*, enumerates the multiplexed frames;
- *T*_{*n*,*m*,*n*} is the transmittance of pixel *h* in the *n*^{th} SLM during m^{th} multiplexed frame, where the index *h* runs from 1 to *H,* enumerating the pixels in the *n*^{th} SLM; and
- *c*_{*i*,*p*}, the contribution strength constant (CSC), denotes the strength of contribution the optical path *p* has on the light ray direction *i*.

The last equality reflects the contribution of the separate paths *L*_{*i*,*p*} to an emitted ray *Lᵢ*. The objective function is the squared difference between the target light field and the generated light field, as described by Eqs. 12 and 13: ${f}_{obj} \left(T\right) = {\sum }_{i = 1}^{I} {W}_{i} {\left({\sum }_{p = 1}^{P} {L}_{i , p} - {L}_{i}^{target}\right)}^{2}$ Eq. 12 ${f}_{obj} \left(T\right) = {\sum }_{i = 1}^{I} {W}_{i} {\left({\sum }_{p = 1}^{P} \frac{1}{M} {\sum }_{m = 1}^{M} {\prod }_{n = 1}^{N} {c}_{i , p} {T}_{n , m , f \left(n, p, i\right)} - {L}_{i}^{target}\right)}^{2}$ Eq. 13 The value of *Wᵢ* is a weighting of the light rays. The weight may be selected as one for all rays. Alternatively, the weighting factor may correlate to the relative importance of the light rays if some light rays may be considered more important than others. Light rays that have the most impact on the visual experience may be given a large weight, while light rays that are less important may be given a small weight. If the weight is set to zero, the light ray is ignored by the optimization.

This object function may not be optimized with NTF. Instead, in some embodiments, the objective function is replaced with the following auxiliary objective function of Eq. 14: ${f}_{obj , auxiliary} \left(T\right) = {\sum }_{i = 1}^{I} {W}_{i} {{\sum }_{p = 1}^{P} \left({L}_{i , p}-{d}_{i , p}{L}_{i}^{target}\right)}^{2}$ Eq. 14 where the constants *d_{i,p}* are selected so that ${\sum }_{p = 1}^{P} {d}_{i , p} = 1$ for all i. This choice causes the individual contributions *L*_{*i*,*p*} to each have their own target values ${L}_{i , p}^{target} = {d}_{i , p} {L}_{i}^{target}$*.* For some embodiments, a transmittance value may be selected by substantially minimizing a sum of a plurality of error terms, each error term being a square difference between (i) a beam value partition of an exit light beam and (ii) a corresponding contribution of one of the internal optical paths. For some embodiments, a plurality of error terms may be represented as a portion of Eq. 14: ${\left({L}_{i , p}-{d}_{i , p}{L}_{i}^{target}\right)}^{2}$, such that *L*_{*i*,*p*} is a contribution to an emitted light beam i by an internal optical path p, that ${L}_{i}^{target}$ is a target beam value for emitted light beam *i*, and that ${d}_{i , p} {L}_{i}^{target}$ is a beam value partition.

Because the constants *d_{i,p}* define a kind of a partitioning, they may be referred to as partitioning constants. As a result, in the merit function, terms like ${\left({L}_{9 , 1}+{L}_{9 , 2}+{L}_{9 , 3}-{L}_{9}^{target}\right)}^{2}$ may be replaced by terms ${\left({L}_{9 , 1}-\frac{1}{3}{L}_{9}^{target}\right)}^{2} , {\left({L}_{9 , 2}-\frac{1}{3}{L}_{9}^{target}\right)}^{2}$, and ${\left({L}_{9 , 3}-\frac{1}{3}{L}_{9}^{target}\right)}^{2}$. Inserting the definition of *L*_{*i*,*p*} to the above equation (Eq. 14) gives Eqs. 15 and 16: ${f}_{obj , auxiliary} \left(T\right) = {\sum }_{i = 1}^{I} {\sum }_{p = 1}^{P} {W}_{i} {\left(\frac{1}{M}{\sum }_{m = 1}^{M} {\prod }_{n = 1}^{N} {c}_{i , p} {T}_{n , m , f \left(n, p, i\right)} - {d}_{i , p} {L}_{i}^{target}\right)}^{2}$ Eq. 15 ${f}_{obj , auxiliary} \left(T\right) = {\sum }_{i = 1}^{I} {\sum }_{p = 1}^{P} {W}_{i} {c}_{i , p}^{2} {\left(\frac{1}{M}{\sum }_{m = 1}^{M} {\prod }_{n = 1}^{N} {T}_{n , m , f \left(n, p, i\right)} - \frac{{d}_{i , p}}{{c}_{i , p}} {L}_{i}^{target}\right)}^{2}$ Eq. 16

Equation 16 has a form suitable for NTF optimization. The summations over the light rays and the separate paths (index *i* and index *p*) may be merged together, so that the term ${W}_{i} {c}_{i , p}^{2}$ takes the place of the weighing factor and $\frac{{d}_{i , p}}{{c}_{i , p}} {L}_{i}^{target}$ becomes the new target light field. In some embodiments, the partitioning constants are initially set to be proportional to their contribution strength constants, as described by Eq. 17: $\frac{{c}_{i , 1}}{{d}_{i , 1}} = \frac{{c}_{i , 2}}{{d}_{i , 2}} = ⋯ = \frac{{c}_{i , P}}{{d}_{i , P}}$ Eq. 17

The NTF optimization may be run, which yields values for the display frames *T*_{*n*,*m*,*h*}. The optimization may be continued with a different choice of partitioning constants, e.g., by selecting values to achieve better results. For some embodiments, a target beam value may be partitioned into a plurality of beam value partitions, with each beam value partition being associated with a corresponding one of the internal optical paths that contributes to an emitted light beam. For some embodiments, transmittance values may be selected to substantially minimize a portion of Eq. 16, namely: ${\sum }_{i}^{I} {{\sum }_{p}^{P} {W}_{i} {c}_{i , p}^{2} \left(\frac{1}{M}{\sum }_{m = 1}^{M} {\prod }_{n = 1}^{N} {T}_{n , m , f \left(n, p, i\right)} - \frac{{d}_{i , p}}{{c}_{i , p}} {L}_{i}^{target}\right)}^{2} .$

For some embodiments, M may be set to 1 (so that frame multiplexing is not performed), and transmittance values may be selected to substantially minimize: ${\sum }_{i}^{I} {{\sum }_{p}^{P} {W}_{i} {c}_{i , p}^{2} \left({\prod }_{n = 1}^{N} {T}_{n , f \left(n, p, i\right)} - \frac{{d}_{i , p}}{{c}_{i , p}} {L}_{i}^{target}\right)}^{2} .$

For some embodiments, *Wᵢ* may be set to 1 for all values of i, and transmittance values may be selected to substantially minimize: ${\sum }_{i}^{I} {{\sum }_{p}^{P} {c}_{i , p}^{2} \left(\frac{1}{M}{\sum }_{m = 1}^{M} {\prod }_{n = 1}^{N} {T}_{n , m , f \left(n, p, i\right)} - \frac{{d}_{i , p}}{{c}_{i , p}} {L}_{i}^{target}\right)}^{2} .$

For some embodiments, M may be set to 1 (so that frame multiplexing is not performed), Wᵢ may be set to 1 for all values of *i*, and transmittance values may be selected to substantially minimize: ${\sum }_{i}^{I} {{\sum }_{p}^{P} {c}_{i , p}^{2} \left({\prod }_{n = 1}^{N} {T}_{n , f \left(n, p, i\right)} - \frac{{d}_{i , p}}{{c}_{i , p}} {L}_{i}^{target}\right)}^{2} .$

For some embodiments, determining a target beam value for an emitted light beam may be based on information characterizing the light field. For some embodiments, selecting a transmittance value may be performed using non-negative tensor factorization (NTF) (or NTF optimization). For some embodiments, each partitioning constant *d_{i,p}* may be selected to be proportional to a corresponding contribution strength constant *c*_{*i*,*p*}.

### Example Implementations

As a starting point, a multi-SLM display is provided, and a certain light field is intended to be reproduced. The light field is assumed to be given as a set of light ray directions and the associated intensities and weights for each direction.

In a computer system used to perform the optimization, the display may be represented as a display structure definition, a type of data structure. The display structure definition may include, for example, a description of how many SLMs the display structure includes, how many pixels are in each SLM, and how many time multiplexed frames may be used. Given a light ray direction, the display structure definition may also contain information to determine the optical paths that contribute to the light intensity in the given direction. Here, an optical path is described by the passing points (pixel indices) where the light ray passes each SLM. The contribution strength constants of each optical path may be provided.

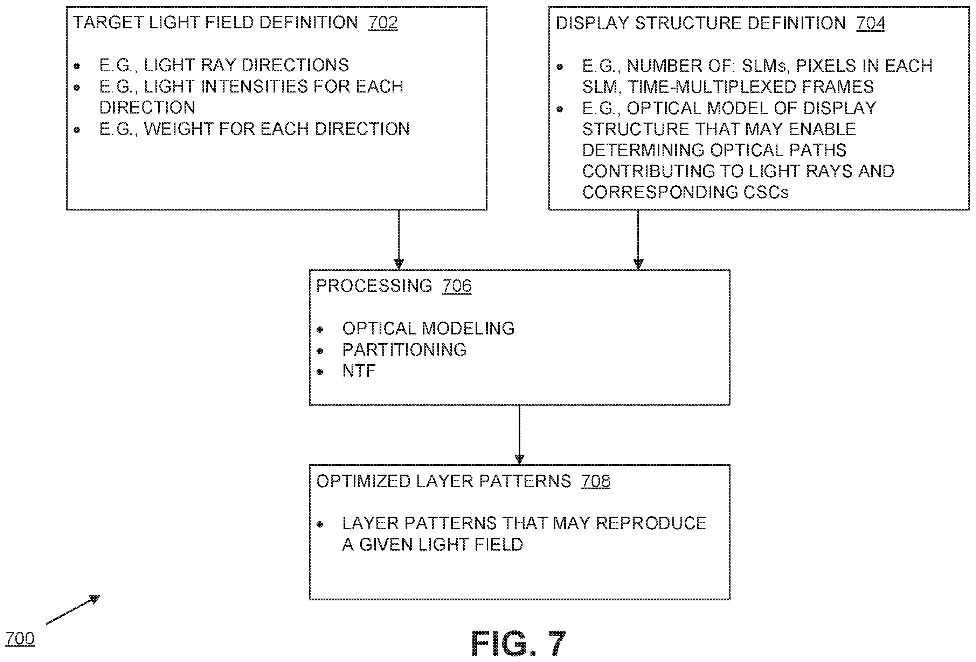

FIG. 7 is a flowchart illustrating an example optimization process according to some embodiments. The process 700 takes as input the target light field definition 702 and the display structure definition 704 and produces the optimized layer patterns 708.

The optimization processing 706 may include optical modelling. In the optical modelling, the display structure definition may be used to find all the optical paths (along with the contribution strength constants), that contribute to the light rays given in the target light field. The optical model may include information used to identify where the light rays pass the SLMs.

An example process may further include partitioning. In the partitioning, the partitioning constants are defined for the contributing optical paths. It may be preferable to set the partitioning constants proportional to the corresponding contribution strength constants, as previously described.

The example optimization process may further include performing a weighted NTF optimization on the optimization problem defined by the partitioning. For example, an iterative method as described in *Wetzstein,* et al. (2012) may be used. Before the iteration, the pixel transmittances may be initialized to some value (e.g., 0.5 transmittance for all pixels). For some embodiments, based at least in part on the beam value partitions, a transmittance value may be selected for at least one controllable-transparency pixel along at least one of the internal optical paths that contributes to an emitted light beam.

The most computationally demanding process may be the NTF, since the other processes may be computationally cheaper (e.g., the partitioning) or may be partly done in advance (e.g., the optical modelling). In some embodiments, the iterative scheme described in *Wetzstein,* et al. (2012) may be implemented by having two accumulator arrays that correspond to all the pixels on a given SLM layer. In the beginning of an update, these accumulator arrays may be initialized to zero, and an iteration over all the light rays may be used to accumulate the array values. If multiple optical paths are used, each of these contributions correspond to a "light ray" in the iteration. Therefore, if the number of optical paths (P) is increased from 1 (the number of paths for the tensor display method) to, for example, 4, the number of iterations is also increased 4-fold. Therefore, the computational load may be considered to be proportional to P. Since the tensor display method (P=1) has reached interactive refresh rates, the multipath method may produce similar update speeds.

The iterative NTF optimization may allow for parallelization. When the light rays are iterated over to accumulate the arrays, the set of light rays may be divided into multiple smaller sets, which are iterated over in separate computational units. Each of these computational units has their own accumulation arrays, which are combined to get the final result.

In some embodiments, the output rays are allowed to have multiple contributions from different optical paths that each have their own contribution strengths, which are described by the contribution strength constants. The partitioning may allow a weighted NTF optimization to be used for displays with multiple contributions. In some embodiments, ray merging may be used in conjunction with the scheme presented here, effectively allowing a denser sampling of a light field to be used in the optical modelling than in the actual optimization. Some embodiments may include repartitioning, as discussed below in the section entitled "Continued Iteration."

### Example Display Hardware

Disclosed methods may be used together with several different display hardware configurations. The disclosed methods allow image rendering with displays that utilize light multipath propagation unlike, e.g., the tensor display method that only deals with single path propagation.

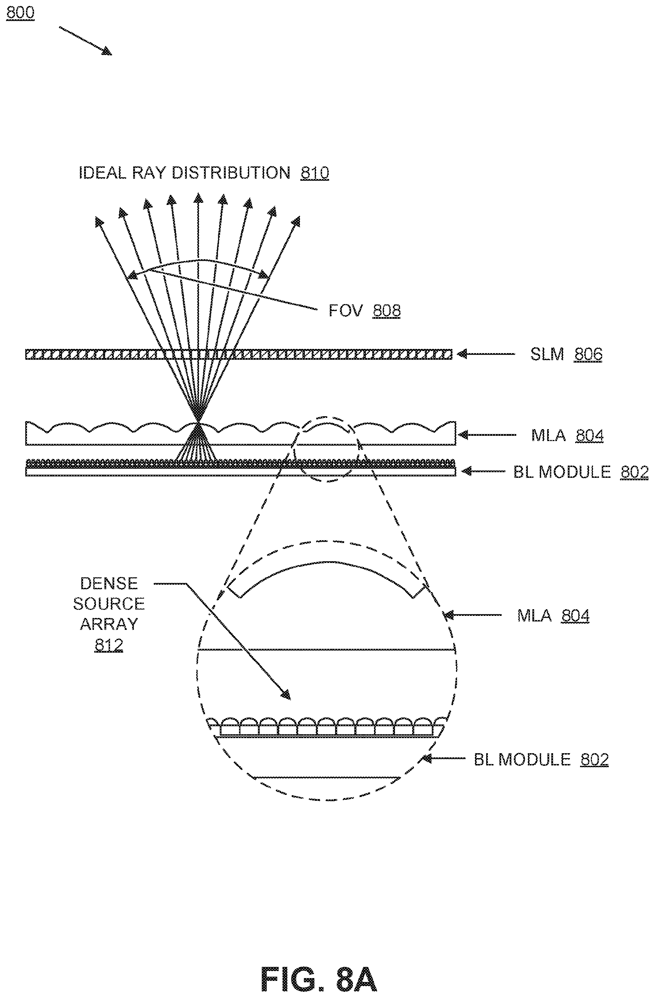

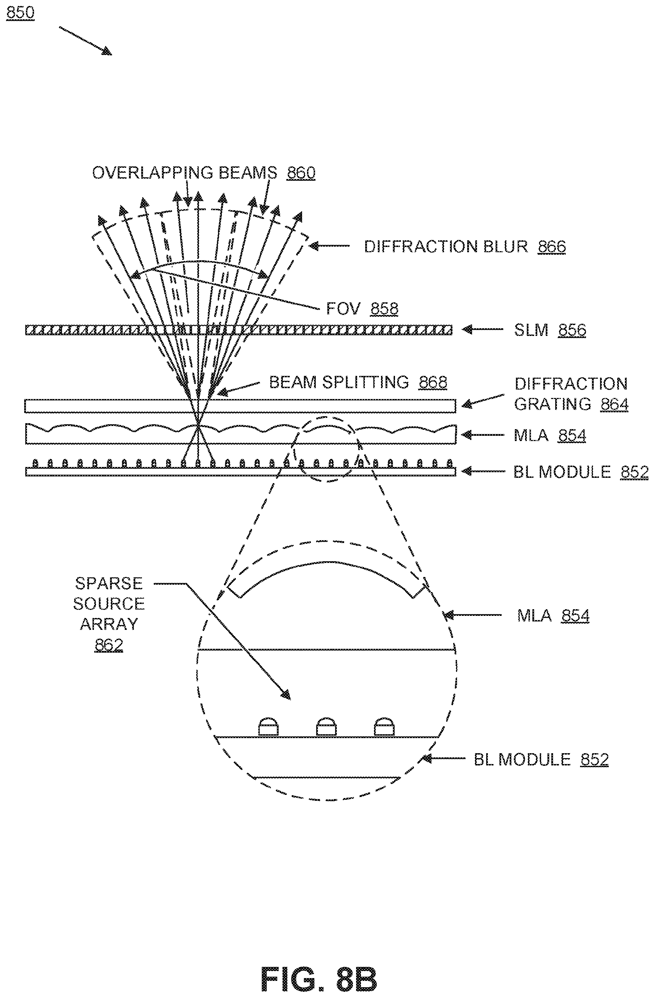

FIG. 8A is a schematic plan view illustrating an example display structure based on single path propagation according to some embodiments. FIG. 8B is a schematic plan view illustrating an example display structure based on multipath propagation according to some embodiments. In order to clarify the difference between these two display structures 800, 850, FIG. 8A presents a directional backlight display structure 800 that may make use of the tensor display method, whereas FIG. 8B shows a structure 850 such that the image may be rendered with a multipath image rendering method.

The display structures illustrated in FIG. 8A and FIG. 8B each include a backlight (BL) module 802, 852 that includes an array of separately controlled light sources. Emitted light may be collected and collimated with microlens arrays (MLA) 804, 854 into directional beams that illuminate the back of spatial light modulators (SLM) 806. 856. The sources may include, e.g., µLEDs and the SLMs 806, 856 may be, e.g., LCD panels. In both cases, the combination of the BL module 802, 852 and MLA 804, 854 may be used for creating directional backlights. Multiview display systems may be formed by synchronizing the SLM pixel patterns to the sequential activation of a group of specific sources that produce the illumination to a specific direction.

In the single path display, each source creates one ideal directional ray or beam. This means that the BL module 802 may call for as many separate sources under each microlens as there are views. The multipath display 850 includes an added diffraction grating 864 after the MLA 854. The diffraction grating 864 performs beam splitting 868, splitting each beam into three separate child-beams that propagate to slightly different directions. In addition, some diffraction blur 866 is created around the ideal ray directions, as it may be reasonably assumed that a real-life diffractive component scatters some of the light outside the intended orders. Some parts of the blurred beams may be overlapping beams 860, creating a situation where multiple light propagation paths exist. These overlapping beam paths are taken into account in the image rendering calculations, as they are summed up and increase light intensity emitted to each direction. This task may not be performed with the tensor display method that assumes only single path propagation.

With suitable arrangement of the MLA 804, 854, diffraction grating 864 and SLM 806, 856, the same field of view (FOV) 808, 858 and number of view directions created with the single path structure may also be created with the multipath display. However, the multipath case, may call for only one third the number of separate source components that single path display case calls for. This means the single path display structure 800 may use a densely packed source array 812, whereas the multipath display structure 850 may use a sparsely packed array 862. In some embodiments, cost savings may be achieved with the multipath hardware structure as fewer active components with control electronics and assembly are used in the BL module.

For some embodiments, the backlight (BL) module includes multiple individually-controllable light sources, which may be arranged as an addressable array of light-emitting elements. The backlight modules 802, 852 are examples of such arrays of light-emitting elements. In some such embodiments, the luminance of the individual light-emitting elements may be selected using an auxiliary objective function according to techniques as describe herein. For example, the light output of an individual light-emitting element during multiplexed frame m may be represented by *T*_{0,*m*,*f*(0,*p*,*i*)}, where *f*(0,*p*,*i*) is an index of a light-emitting element (considered here to be in layer zero) at the beginning of internal optical path p to emitted light beam i. In some such embodiments, the light output of the light-emitting elements and the transparency of the controllable-transparency pixels may be jointly selected to substantially minimize the value of the following expression ${\sum }_{i = 1}^{I} {{\sum }_{p = 1}^{P} {W}_{i} {c}_{i , p}^{2} \left(\frac{1}{M}{\sum }_{m = 1}^{M} {\prod }_{n = 0}^{N} {T}_{n , m , f \left(n, p, i\right)} - \frac{{d}_{i , p}}{{c}_{i , p}} {L}_{i}^{target}\right)}^{2}$, wherein: *i* is an index over emitted light beams; *p* is an index over internal optical paths; *Wᵢ* is a weighting associated with respective light beam i (in some embodiments, *Wᵢ* ≡ 1); *c_{i,p}* is a contribution strength constant proportional to a contribution of internal optical path *p* to exit light beam *i*; *M* is a number of multiplexed frames (in some embodiments, *M* = 1); m is an index over multiplexed frames; *N* is a number of layers of controllable-transparency pixels; *n* is an index over layers, where *n* = 0 represents a layer of light-emitting elements and values of *n* > 0 represent layers of controllable-transparency pixels; *f*(*n, p, i)* is an index of a controllable-transparency pixel (or light-emitting element, for layer zero) in layer n along internal optical path p to emitted light beam *i; T*_{*n,m,f*(*n,p,i*)} is a transmittance value (or luminance value, in layer zero) of a controllable-transparency pixel *f(n, p,i*) in layer *n* during multiplexed frame *m*; *d_{i,p}* is a partitioning constant; and ${L}_{i}^{target}$ is a target beam value for emitted light beam i.

The use of individually-controllable light sources can allow for a display with a reduced number of layers of controllable-transparency pixels. For example, some embodiments may include a single layer of light-emitting elements and a single layer of controllable-transparency pixels.

### Continuous Distribution of Optical Paths

Some display structures may produce a continuous distribution of possible optical paths. For example, it may be that after passing a small aperture, a light ray may be considered to select a random direction according to some probability distribution function. In this case, it may be helpful to assume that from the optimization point of view, only the paths which define a different ordered set of pixels may be considered different. The number of optical paths like this may be large but will be finite. To reduce the computational load, paths that are known to have little effect may be ignored.

### Continued Iteration

In some embodiments, the optimization method includes repartitioning. In the event that the initially selected partitioning unnecessarily constrains the layer patterns, the partitioning may be performed again and the NTF optimization repeated with that partitioning. For example, it may be assumed that after the NTF optimization, the light contributions for the i^{th} ray are described by the following equation, Eq. 18: ${L}_{i} = {L}_{i , 1} + {L}_{i , 2}$ Eq. 18 where *L*_{*i*,1} = 4.1 and *L*_{*i*,2} = 8.1 and the values targeted by the optimization are ${L}_{i , 1}^{target} = 6.0$ and ${L}_{i , 2}^{target} = 6.0$. Therefore the targeted total intensity is ${L}_{i}^{target} = {L}_{i , 1}^{target} + {L}_{i , 2}^{target} = 12.0$. Because only the total intensity is observed by the viewer, the target intensities may instead be set to ${L}_{i , 1}^{target} = 4.0$ and ${L}_{i , 2}^{target} = 8.0$, which give the same targeted value for the total intensity. These values are also closer to the actual values produced by the optimization, so that when the NTF algorithm is run again, the objective function changes less strongly with variation of the pixel transmittances. This means that in the optimization, the pixel transmittances may be allowed to move more freely and therefore better accommodate intensity tuning for some other light ray.

### Ray Merging

If the light field produced by the display has a very fine structure, e.g., when one of the ray coordinates (x,y,θ,φ) are varied, the light intensity may vary greatly. If the light field is sampled at a lower spatial frequency than this variation, aliasing effects may be visible in the produced light field. This effect may be taken into account in the optical modelling. The selected light rays in the target light field may be considered to each represent a range of light rays, and therefore when calculating the contributions to a light ray intensity, all optical paths that contribute to a specific range of light rays may be taken into account using techniques adapted from multisampling antialiasing to calculate the contribution strength constants. More appropriate values for the contribution strength constants (CSCs) may be obtained by this multisampling. This process may be visualized as rays merging, by imagining that multiple "narrow" light rays that cover some range in the light ray co-ordinate space, are merged into a single "thick" light ray. This method does not necessarily increase the computational load, since the CSC computation may be based on fitted analytic functions or a lookup table, for example.

This kind of ray merging may also be used to take into account the limited accuracy of the eye. If the display may produce such fine detail and narrow rays that this detail would go unnoticed to the human eye, these rays may be merged and not optimized separately.

### Reducing the Effect of Stray Light Due to Diffraction

For a multilayered display, pixels may be small enough to cause noticeable diffraction. Accordingly, when a narrow beam of light is incident on the pixel aperture, the rays may be bent according to some distribution function. If this effect is ignored in rendering to the display, the quality of the produced light field may deteriorate. In some embodiments, multipath rendering method may counter this deterioration.

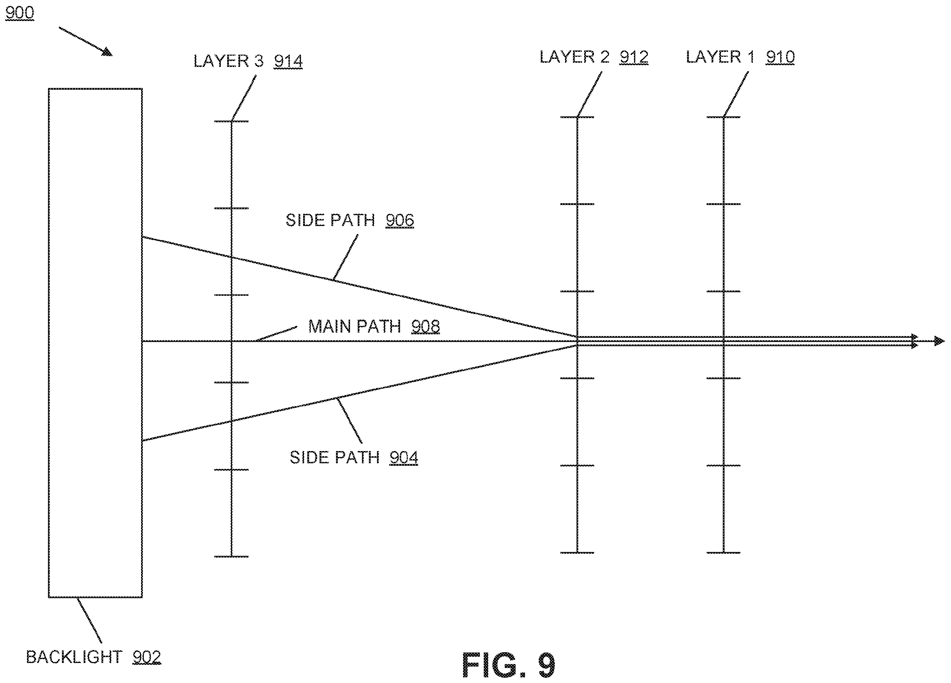

FIG. 9 is a schematic plan view illustrating an example of diffraction generating multiple paths according to some embodiments. Because light rays bend at the small aperture (pixel) in the second layer 912, there are, in addition to the main path 908, two additional side paths 904, 906 that bring a small contribution to the light ray intensity.

As illustrated in the example, a display 900 includes a backlight 902 and three SLM layers 910, 912, 914, each having some number of pixels. As shown in the example, the light rays bend at the second layer 912, so that most light continues straight, but a small part (e.g., 10%), bends enough that it may be considered to come from the neighboring pixels of layer 3 (914). This mock display 900 may be used to demonstrate the multipath optimization method.

To test the multipath method, computer models of a display were constructed. The simulated displays had 3 SLMs, with each having 20 pixels and 4 time-multiplexed frames. The target light field was defined as 100 light rays with randomly selected intensity from range [0, 0.1], with each light ray having equal weight. The light rays were assigned three paths, one main path with contribution strength constant 1 and two side paths with contribution strength constants ranging between 0.01 and 1.0. The display transmittances were initialized to value 0.5 for all pixels in all frames.

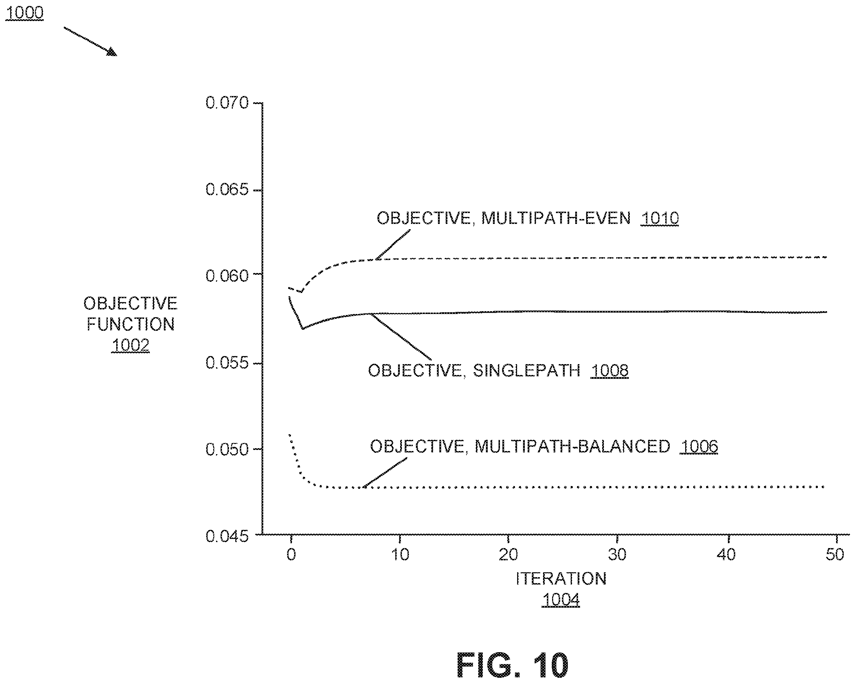

Three different optimization methods were used to optimize the frames. The three methods will be called "singlepath", "multipath-even", and "multipath-balanced". In the singlepath method, the side paths were ignored, resulting effectively to the tensor display method. In the multipath-even method, the multipath method is used, and the partitioning constants are set equal. In the multipath-balanced method, the partitioning constants are set proportional to the contribution strength constants, as suggested earlier. The used weighted NTF algorithm was the algorithm described in *Wetzstein,* et al. (2012) with total of 50 iterations, which seemed to be enough to get converged results, as is demonstrated in FIG. 10.

FIG. 10 is a line graph illustrating a convergence for each of three optimization methods according to some embodiments. FIG. 10 is a graph 1000 illustrating a convergence at an iteration value 1004 of an objective function value 1002 for each of three different optimization methods (objective, multipath-balanced method 1006; objective, singlepath method 1008; and objective, multipath-even method 1010). For this simulation, the side path contribution strength constants were set to 0.1.

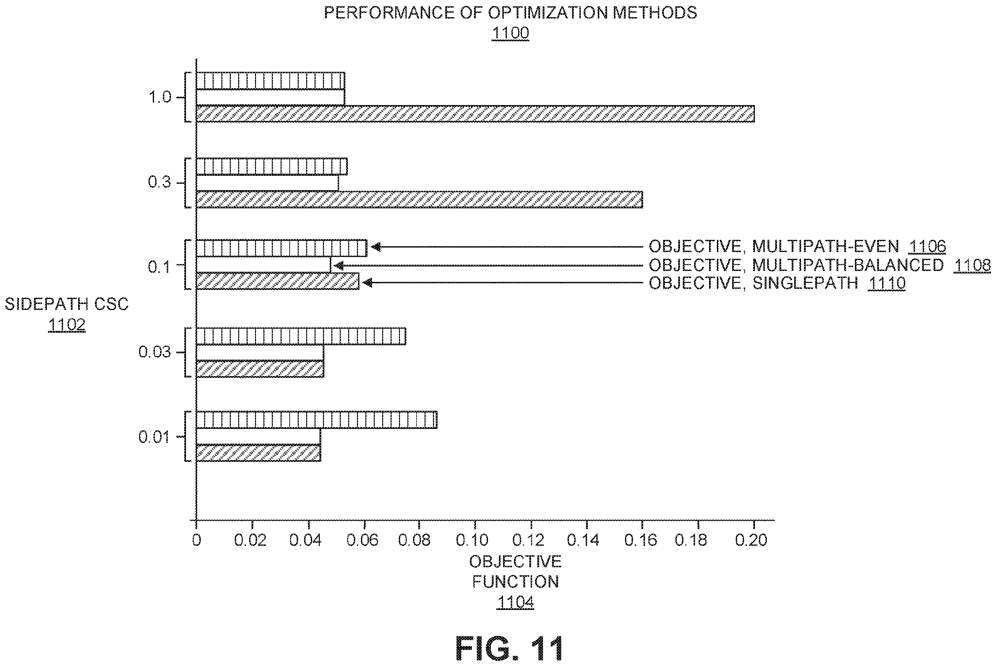

FIG. 11 is a bar graph comparing the performance of three optimization methods according to some embodiments. The numbers on the y-axis correspond to the sidepath contribution strength constants (CSC) 1102. The largest bar extends outside of the figure. As shown in the graph of performance of optimization methods 1100, it is seen that the multipath-even method 1106 gives the best performance for the objective function 1104 in all tested cases. Comparing the singlepath method 1110 to the multipath-balanced method 1108, the singlepath method 1110 performs as well as the multipath-balanced method 1108 if the sidepath CSCs 1102 go to zero. If the sidepath CSC 1102 is increased, the singlepath method 1110 has increasingly poor performance, as it is forced to ignore an increasingly large contribution to the light field. Comparing the multipath-even method 1106 to the multipath-balanced method 1108, the two models perform the same if the sidepath CSCs are set to 1.0. This is expected, as the two models define the same partitioning at that point. If the sidepath CSCs 1102 are lowered, however, the performance of multipath-even method 1106 is strongly weakened, compared to multipath-balanced method 1108. Comparing the singlepath method 1110 and the multipath-even method 1106, which method performs better depends on the situation. For example, completely ignoring the sidepaths is sometimes better than multipath-even, which shows that multipath-even may not be an optimal choice.

In conclusion, this example in FIG. 11 demonstrates that the multipath method may in some situations reduce the impact of unwanted stray light in multi-SLM displays, and that the choice of setting the partitioning constants proportional to the CSCs may be helpful. It was also shown that the method works with multiple paths of similar relative strength.

### Additional Embodiments

An example method of operating a display device in which a plurality of internal light paths contribute to each respective output beam in accordance with some embodiments may include: partitioning a target beam value ${L}_{i}^{target}$ of each respective output beam i into plurality of partitioned beam values ${d}_{i , p} {L}_{i}^{target}$, wherein each partitioned beam value ${d}_{i , p} {L}_{i}^{target}$ is associated with a respective one *i, p* of the internal light paths contributing to the output beam i, and wherein each of the internal light paths traverses at least one controllable-transparency pixel of the display device; and selecting a respective transmittance value T for each of a plurality of pixels in the display device, wherein the selection is made to substantially minimize a total error between each partitioned beam value ${d}_{i , p} {L}_{i}^{target}$ and the contribution of the associated light path *i, p* to the output beam i.

For some embodiments of the example method, the target beam values ${L}_{i}^{target}$ may represent a target light field.

For some embodiments of the example method, the contribution of the associated light path *i, p* to the output beam i may be represented as $\frac{1}{M} {\sum }_{m = 1}^{M} {\prod }_{n = 1}^{N} {c}_{i , p} {T}_{n , m , f \left(n, p, i\right)}$.

For some embodiments of the example method, the total error may be represented as ${\sum }_{i = 1}^{I} {{\sum }_{p = 1}^{P} {W}_{i} \left(\frac{1}{M}{\sum }_{m = 1}^{M} {\prod }_{n = 1}^{N} {c}_{i , p} {T}_{n , m , f \left(n, p, i\right)} - {d}_{i , p} {L}_{i}^{target}\right)}^{2}$*.*

For some embodiments of the example method, selecting a respective transparency value T for each of a plurality of pixels may be performed using non-negative tensor factorization (NTF).

For some embodiments of the example method, each of the internal light paths may further traverse at least one beam-splitting element.

For some embodiments of the example method, each of the internal light paths may further traverse at least one diffraction grating.

For some embodiments of the example method, each of the internal light paths may traverse at least two controllable-transparency pixels of the display device.

For some embodiments of the example method, the display device may further include a backlight module.

For some embodiments of the example method, the display device may further include a light-emitting layer.

For some embodiments of the example method, a value of each partitioning constant *d*_{*i*,*p*} may be selected based on a corresponding contribution strength constant *c_{i,p}*.

For some embodiments of the example method, a value of each partitioning constant *d*_{*i*,*p*} may be selected to be proportional to a corresponding contribution strength constant *c_{i,p}*.

Some embodiments of the example method may further include operating the display using the selected transparency values *T*.

Another example method of producing a light field in accordance with some embodiments may include: determining an optical model of a multilayer spatial light modulator (SLM) display comprising a plurality of independent light modulating pixels; partitioning an objective function to allow for non-negative tensor factorization (NTF) optimization; and altering the light modulation characteristics of independent light modulating pixels using time multiplexed frames to generate voxels of the light field.

For some embodiments of another example method, determining the optical model may include determining optical paths and corresponding contribution strength constants of light rays contributing to the target light field.

Some embodiments of another example method may further include calculating partitioning constants, wherein altering the light modulation characteristics of independent light modulating pixels may be based at least in part on the calculated partitioning constants.

An example system apparatus in accordance with some embodiments may include: a processor and a non-transitory computer-readable medium storing instructions operative to perform any of the methods listed above.

Another example display device apparatus in accordance with some embodiments may include: a sparse light emitting element array; a collimating optical layer; a diffraction grating layer overlaying the collimating optical layer; the diffraction grating layer operative to split beams of light into a plurality of beam sections; and a spatial light modulator operative to provide control over the transmission of beam sections from the diffraction layer to outside the display device.

Note that various hardware elements of one or more of the described embodiments are referred to as "modules" that carry out (perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (e.g., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method for rendering a light field, using a display device (650) comprising one or more spatial light modulators including controllable-transparency pixels (654, 656, 658), wherein the display device is configured to emit exit light beams such that each of the exit light beams is formed by contributions from lights propagating along corresponding internal optical paths, each of the internal optical paths passes through at least one of the controllable-transparency pixels, the method comprising:
determining target beam values for each exit light beam emitted from the display device;
for each of the exit light beams, partitioning the respective target beam value into beam value partitions, wherein each of the beam value partitions being associated with a corresponding one of the internal optical paths; and
selecting transmittance values for the controllable-transparency pixels by iteratively adjusting the transmittance values so that a sum of error terms is minimized, each error term being a square difference between (i) a contribution from light propagating along an internal optical path to one of the exit light beams and (ii) a beam value partition associated with that internal optical path.

2. The method of claim 1, wherein the error term is represented as ${\left({L}_{i , p}-{d}_{i , p}{L}_{i}^{target}\right)}^{2} ,$
wherein *L*_{*i*,*p*} is a contribution to an exit light beam i by an internal optical path *p*,
wherein ${L}_{i}^{target}$ is a target beam value for an exit light beam *i*, and
wherein ${d}_{i , p} {L}_{i}^{target}$ is a beam value partition associated with an internal optical path *p* that contributes to an exit light beam *i*.

3. The method of claim 2, wherein *L*_{*i*,*p*} is a product of factors comprising a contribution strength constant *c*_{*i*,*p*} and at least one transmittance value of at least one controllable-transparency pixel located along the optical path *p*.

4. The method of claim 1, wherein the selecting of the transmittance values comprises selecting transmittance values to minimize the value of the following expression ${\sum }_{i = 1}^{I} {\sum }_{p = 1}^{P} {W}_{i} {c}_{i , p}^{2} {\left(\frac{1}{M}{\sum }_{m = 1}^{M} {\prod }_{n = 1}^{N} {T}_{n , m , f \left(n, p, i\right)} - \frac{{d}_{i , p}}{{c}_{i , p}} {L}_{i}^{target}\right)}^{2}$ wherein:
*i* is an index over exit light beams;
*p* is an index over internal optical paths;
*Wᵢ* is a weighting associated with respective light beam *i*;
*c*_{*i*,*p*} is a contribution strength constant proportional to a contribution of internal optical path p to exit light beam *i*;
*M* is a number of multiplexed frames;
*m* is an index over multiplexed frames;
*N* is a number of layers of controllable-transparency pixels;
*n* is an index over controllable-transparency pixel layers;
*f*(*n, p, i)* is an index of a controllable-transparency pixel in layer *n,* the pixel is located along internal optical path p that contributes to an exit light beam *i*;
*T*_{*n,m,f*(*n,p,i*)} is a transmittance value of a controllable-transparency pixel *f*(*n, p, i)* in layer *n* during multiplexed frame m;
*d*_{*i*,*p*} is a partitioning constant; and
${L}_{i}^{target}$ is a target beam value for an exit light beam i.

5. The method of claim 1, wherein the selecting of the transmittance values comprises selecting transmittance values to minimize the value of the following expression ${\sum }_{i = 1}^{I} {{\sum }_{p = 1}^{P} {c}_{i , p}^{2} \left({\prod }_{n = 1}^{N} {T}_{n , f \left(n, p, i\right)} - \frac{{d}_{i , p}}{{c}_{i , p}} {L}_{i}^{target}\right)}^{2} ,$ wherein:
*i* is an index over exit light beams;
*p* is an index over internal optical paths;
*c*_{*i*,*p*} is a contribution strength constant proportional to a contribution of internal optical path *p* to exit light beam *i*;
*N* is a number of layers of controllable-transparency pixels;
*n* is an index over controllable-transparency pixel layers;
*f*(*n, p, i)* is an index of a controllable-transparency pixel in layer *n,* the pixel is located along internal optical path *p* that contributes to an exit light beam *i*;
*T*_{*n,f*(*n,p,i*)} is a transmittance value of a controllable-transparency pixel *f*(*n, p, i)* in layer *n*;
*d*_{*i*,*p*} is a partitioning constant; and
${L}_{i}^{target}$ is a target beam value for an exit light beam *i*.

6. The method of claim 1, wherein selecting transmittance values comprises selecting transmittance values to minimize the value of the following expression ${\sum }_{i = 1}^{I} {{\sum }_{p = 1}^{P} {W}_{i} {c}_{i , p}^{2} \left({\prod }_{n = 1}^{N} {T}_{n , f \left(n, p, i\right)} - \frac{{d}_{i , p}}{{c}_{i , p}} {L}_{i}^{target}\right)}^{2} ,$ wherein:
*i* is an index over exit light beams;
*p* is an index over internal optical paths;
*Wᵢ* is a weighting associated with respective light beam *i*;
*c*_{*i*,*p*} is a contribution strength constant proportional to a contribution of internal optical path *p* to exit light beam *i*;
*N* is a number of layers of controllable-transparency pixels;
*n* is an index over controllable-transparency pixel layers;
*f*(*n, p, i)* is an index of a controllable-transparency pixel in layer *n,* the pixel is located along internal optical path *p* that contributes to an exit light beam *i*;
*T*_{*n,f*(*n,p,i*)} is a transmittance value of a controllable-transparency pixel *f*(*n, p, i)* in layer *n*;
*d*_{*i*,*p*} is a partitioning constant; and
${L}_{i}^{target}$ is a target beam value for an exit light beam *i*.

7. The method of claim 1, wherein selecting transmittance values comprises selecting transmittance values to minimize the value of the following expression ${\sum }_{i = 1}^{I} {{\sum }_{p = 1}^{P} {c}_{i , p}^{2} \left(\frac{1}{M}{\sum }_{m = 1}^{M} {\prod }_{n = 1}^{N} {T}_{n , m , f \left(n, p, i\right)} - \frac{{d}_{i , p}}{{c}_{i , p}} {L}_{i}^{target}\right)}^{2} ,$ wherein:
*i* is an index over exit light beams;
*p* is an index over internal optical paths;
*c*_{*i*,*p*} is a contribution strength constant proportional to a contribution of internal optical path p to exit light beam *i*;
*M* is a number of multiplexed frames;
*m* is an index over multiplexed frames;
*N* is a number of layers of controllable-transparency pixels;
*n* is an index over controllable-transparency pixel layers;
*f*(*n, p, i)* is an index of a controllable-transparency pixel in layer *n,* the pixel is located along internal optical path *p* that contributes to an exit light beam *i*;
*T*_{*n,m,f*(*n,p,i*)} is a transmittance value of a controllable-transparency pixel *f*(*n, p, i)* in layer *n* during multiplexed frame m;
*d*_{*i*,*p*} is a partitioning constant; and
${L}_{i}^{target}$ is a target beam value for an exit light beam *i*.

8. The method of any of claims 1-7, wherein determining the target beam value for the exit light beam is based on information characterizing a light field.

9. The method of any of claims 1-8, wherein selecting of the transmittance values is performed using non-negative tensor factorization (NTF).

10. The method of any of claims 4-9, wherein a value of each partitioning constant *d*_{*i*,*p*} is selected based on a corresponding contribution strength constant *c*_{*i*,*p*}.

11. The method of claim 10, wherein a value of each partitioning constant *d*_{*i*,*p*} is selected to be proportional to a corresponding contribution strength constant *c_{i,p}*.

12. The method of any of claims 1-11, further comprising, based at least in part on the beam value partitions, selecting a light output for at least one light-emitting element at a beginning of at least one of the internal optical paths.

13. An apparatus for rendering a light field, comprising:
a display device comprising one or more spatial light modulators including controllable-transparency pixels, wherein the display device is configured to emit exit light beams such that each of the exit light beams is formed by contributions from lights propagating along corresponding internal optical paths, each of the internal optical paths passes through at least one of the controllable-transparency pixels; and
a processor configured to perform light field rendering using the display device including at least:
determining target beam values for each exit light beam emitted from the display device,
for each of the exit light beams, partitioning the respective target beam value into beam value partitions, wherein each of the beam value partitions being associated with a corresponding one of the internal optical paths, and
selecting transmittance values for the controllable-transparency pixels by iteratively adjusting the transmittance values so that a sum of error terms is minimized, each error term being a square difference between (i) a contribution from light propagating along an internal optical path to one of the exit light beam and (ii) a beam value partition associated with that internal optical path.

14. The apparatus of claim 13, wherein the display device further comprising:
a light-emitting layer,
wherein the internal optical paths extend from the light-emitting layer through the one or more spatial light modulators.

## Patentansprüche

1. Verfahren zum Rendern eines Lichtfeldes unter Verwendung einer Anzeigevorrichtung (650), die einen oder mehrere räumliche Lichtmodulatoren umfasst, die transparenzsteuerbare Pixel (654, 656, 658) aufweisen, wobei die Anzeigevorrichtung dazu eingerichtet ist, Austrittslichtstrahlen so auszusenden, dass jeder der Austrittslichtstrahlen durch Beiträge von Licht gebildet wird, das sich entlang entsprechender innerer optischer Pfade ausbreitet, wobei jeder der inneren optischen Pfade durch mindestens eines der transparenzsteuerbaren Pixel hindurch verläuft, wobei das Verfahren umfasst:
Bestimmen von Zielstrahlwerten für jeden von der Anzeigevorrichtung ausgesendeten Austrittslichtstrahl;
für jeden der Austrittslichtstrahlen, Partitionieren des jeweiligen Zielstrahlwertes in Strahlwertpartitionen, wobei jede der Strahlwertpartitionen mit einem entsprechenden der inneren optischen Pfade verknüpft ist; und
Auswählen von Durchlässigkeitswerten für die transparenzsteuerbaren Pixel durch iteratives Justieren der Durchlässigkeitswerte so, dass eine Summe von Fehlertermen minimiert wird, wobei jeder Fehlerterm eine quadratische Differenz zwischen (i) einem Beitrag von Licht, das sich entlang eines inneren optischen Pfades ausbreitet, zu einem der Austrittslichtstrahlen und (ii) einer Strahlwertpartition, die mit diesem inneren optischen Pfad verknüpft ist, ist.

2. Verfahren nach Anspruch 1, wobei der Fehlerterm dargestellt wird als: ${\left({L}_{i , p}-{d}_{i , p}{L}_{i}^{target}\right)}^{2} ,$
wobei L_{i*,*p} ein Beitrag zu einem Austrittslichtstrahl i durch einen inneren optischen Pfad p ist,
wobei ${L}_{i}^{target}$ ein Zielstrahlwert für einen Austrittslichtstrahl i ist, und
wobei ${d}_{i , p} {L}_{i}^{target}$ eine Strahlwertpartition ist, die mit einem inneren optischen Pfad p verknüpft ist, der zu einem Austrittslichtstrahl i beiträgt.

3. Verfahren nach Anspruch 2, wobei L_{i*,*p} ein Produkt aus Faktoren ist, die eine Beitragsstärkekonstante c_{i,p} und mindestens einen Durchlässigkeitswert mindestens eines entlang des optischen Pfades p befindlichen transparenzsteuerbaren Pixels umfassen.

4. Verfahren nach Anspruch 1, wobei das Auswählen der Durchlässigkeitswerte das Auswählen von Durchlässigkeitswerten umfasst, um den Wert des folgenden Ausdrucks zu minimieren: ${\sum }_{i = 1}^{I} {\sum }_{p = 1}^{P} {W}_{i} {c}_{i , p}^{2} {\left(\frac{1}{M}{\sum }_{m = 1}^{M} {\prod }_{n = 1}^{N} {T}_{n , m , f \left(n, p, i\right)} - \frac{{d}_{i , p}}{{c}_{i , p}} {L}_{i}^{target}\right)}^{2}$ wobei:
i ein Index über die Austrittslichtstrahlen ist;
p ein Index über innere optische Pfade ist;
Wᵢ eine mit dem jeweiligen Lichtstrahl i verknüpfte Gewichtung ist;
c_{i*,*p} eine Beitragsstärkekonstante ist, die sich proportional zu einem Beitrag des inneren optischen Pfades p zu dem Austrittslichtstrahl i verhält;
M eine Anzahl multiplexierter Frames ist;
m ein Index über multiplexierte Frames ist;
N eine Anzahl von Schichten aus transparenzsteuerbaren Pixeln ist;
n ein Index über Schichten aus transparenzsteuerbaren Pixeln ist;
f(n,p,i) ein Index eines transparenzsteuerbaren Pixels in Schicht n ist, wobei sich das Pixel entlang des inneren optischen Pfades p befindet, der zu einem Austrittslichtstrahl i beiträgt;
T_{n,m,f*(*n,p,i)} ein Durchlässigkeitswert eines transparenzsteuerbaren Pixels *f*(n,p,i) in Schicht n während des multiplexierten Frames m ist;
d_{i*,*p} eine Partitionierungskonstante ist; und
${L}_{i}^{target}$ ein Zielstrahlwert für einen Austrittslichtstrahl i ist.

5. Verfahren nach Anspruch 1, wobei das Auswählen der Durchlässigkeitswerte das Auswählen von Durchlässigkeitswerten umfasst, um den Wert des folgenden Ausdrucks zu minimieren: ${\sum }_{i = 1}^{I} {{\sum }_{p = 1}^{P} {c}_{i , p}^{2} \left({\prod }_{n = 1}^{N} {T}_{n , f \left(n, p, i\right)} - \frac{{d}_{i , p}}{{c}_{i , p}} {L}_{i}^{target}\right)}^{2} ,$ wobei:
i ein Index über die Austrittslichtstrahlen ist;
p ein Index über innere optische Pfade ist;
c_{i*,*p} eine Beitragsstärkekonstante ist, die sich proportional zu einem Beitrag des inneren optischen Pfades p zu dem Austrittslichtstrahl i verhält;
N eine Anzahl von Schichten aus transparenzsteuerbaren Pixeln ist;
n ein Index über Schichten aus transparenzsteuerbaren Pixeln ist;
f(n,p,i) ein Index eines transparenzsteuerbaren Pixels in Schicht n ist, wobei sich das Pixel entlang des inneren optischen Pfades p befindet, der zu einem Austrittslichtstrahl i beiträgt;
T_{n,*f*(n,p,i)} ein Durchlässigkeitswert eines transparenzsteuerbaren Pixels *f*(n,p,i) in Schicht n ist;
d_{i*,*p} eine Partitionierungskonstante ist; und
${L}_{i}^{target}$ ein Zielstrahlwert für einen Austrittslichtstrahl i ist.

6. Verfahren nach Anspruch 1, wobei das Auswählen von Durchlässigkeitswerten das Auswählen von Durchlässigkeitswerten umfasst, um den Wert des folgenden Ausdrucks zu minimieren: ${\sum }_{i = 1}^{I} {{\sum }_{p = 1}^{P} {W}_{i} {c}_{i , p}^{2} \left({\prod }_{n = 1}^{N} {T}_{n , f \left(n, p, i\right)} - \frac{{d}_{i , p}}{{c}_{i , p}} {L}_{i}^{target}\right)}^{2} ,$ wobei:
i ein Index über die Austrittslichtstrahlen ist;
p ein Index über innere optische Pfade ist;
Wᵢ eine mit dem jeweiligen Lichtstrahl i verknüpfte Gewichtung ist;
c_{i*,*p} eine Beitragsstärkekonstante ist, die sich proportional zu einem Beitrag des inneren optischen Pfades p zu dem Austrittslichtstrahl i verhält;
N eine Anzahl von Schichten aus transparenzsteuerbaren Pixeln ist;
n ein Index über Schichten aus transparenzsteuerbaren Pixeln ist;
*f*(n,p,i) ein Index eines transparenzsteuerbaren Pixels in Schicht n ist, wobei sich das Pixel entlang des inneren optischen Pfades p befindet, der zu einem Austrittslichtstrahl i beiträgt;
T_{n*,f*(n,p,i)} ein Durchlässigkeitswert eines transparenzsteuerbaren Pixels f(n,p,i) in Schicht n ist;
d_{i*,*p} eine Partitionierungskonstante ist; und
${L}_{i}^{target}$ ein Zielstrahlwert für einen Austrittslichtstrahl i ist.

7. Verfahren nach Anspruch 1, wobei das Auswählen von Durchlässigkeitswerten das Auswählen von Durchlässigkeitswerten umfasst, um den Wert des folgenden Ausdrucks zu minimieren: ${\sum }_{i = 1}^{I} {{\sum }_{p = 1}^{P} {c}_{i , p}^{2} \left(\frac{1}{M}{\sum }_{m = 1}^{M} {\prod }_{n = 1}^{N} {T}_{n , m , f \left(n, p, i\right)} - \frac{{d}_{i , p}}{{c}_{i , p}} {L}_{i}^{target}\right)}^{2} ,$ wobei:
i ein Index über die Austrittslichtstrahlen ist;
p ein Index über innere optische Pfade ist;
c_{i*,*p} eine Beitragsstärkekonstante ist, die sich proportional zu einem Beitrag des inneren optischen Pfades p zu dem Austrittslichtstrahl i verhält;
M eine Anzahl multiplexierter Frames ist;
m ein Index über multiplexierte Frames ist;
N eine Anzahl von Schichten aus transparenzsteuerbaren Pixeln ist;
n ein Index über Schichten aus transparenzsteuerbaren Pixeln ist;
f(n,p,i) ein Index eines transparenzsteuerbaren Pixels in Schicht n ist, wobei sich das Pixel entlang des inneren optischen Pfades p befindet, der zu einem Austrittslichtstrahl i beiträgt;
T_{n,*m,f*(n,p,i)} ein Durchlässigkeitswert eines transparenzsteuerbaren Pixels f(n,p,i) in Schicht n während des multiplexierten Frames m ist;
d_{i*,*p} eine Partitionierungskonstante ist; und
${L}_{i}^{target}$ ein Zielstrahlwert für einen Austrittslichtstrahl i ist.

8. Verfahren nach einem der Ansprüche 1-7, wobei das Bestimmen des Zielstrahlwertes für den Austrittslichtstrahl auf Informationen basiert, die ein Lichtfeld charakterisieren.

9. Verfahren nach einem der Ansprüche 1-8, wobei das Auswählen der Durchlässigkeitswerte unter Verwendung einer nicht-negativen Tensorfaktorisierung (NTF) durchgeführt wird.

10. Verfahren nach einem der Ansprüche 4-9, wobei ein Wert jeder Partitionierungskonstante d_{i*,*p} auf der Grundlage einer entsprechenden Beitragsstärkekonstante c_{i,p} ausgewählt wird.

11. Verfahren nach Anspruch 10, wobei ein Wert jeder Partitionierungskonstante d_{i*,*p} so ausgewählt wird, dass er sich proportional zu einer entsprechenden Beitragsstärkekonstante c_{i,p} verhält.

12. Verfahren nach einem der Ansprüche 1-11, das des Weiteren umfasst, mindestens teilweise auf der Grundlage der Strahlwertpartitionen eine Lichtausgabe für mindestens ein Leuchtelement an einem Anfang mindestens eines der inneren optischen Pfade auszuwählen.

13. Vorrichtung zum Rendern eines Lichtfeldes, umfassend:
eine Anzeigevorrichtung, die einen oder mehrere räumliche Lichtmodulatoren umfasst, die transparenzsteuerbare Pixel aufweisen, wobei die Anzeigevorrichtung dazu eingerichtet ist, Austrittslichtstrahlen so auszusenden, dass jeder der Austrittslichtstrahlen durch Beiträge von Licht gebildet wird, das sich entlang entsprechender innerer optischer Pfade ausbreitet, wobei jeder der inneren optischen Pfade durch mindestens eines der transparenzsteuerbaren Pixel hindurch verläuft; und
einen Prozessor, der dazu eingerichtet ist, unter Verwendung der Anzeigevorrichtung eine Lichtfeldrenderung durchzuführen, mindestens umfassend:
Bestimmen von Zielstrahlwerten für jeden von der Anzeigevorrichtung ausgesendeten Austrittslichtstrahl,
für jeden der Austrittslichtstrahlen, Partitionieren des jeweiligen Zielstrahlwertes in Strahlwertpartitionen, wobei jede der Strahlwertpartitionen mit einem entsprechenden der inneren optischen Pfade verknüpft ist, und
Auswählen von Durchlässigkeitswerten für die transparenzsteuerbaren Pixel durch iteratives Justieren der Durchlässigkeitswerte so, dass eine Summe von Fehlertermen minimiert wird, wobei jeder Fehlerterm eine quadratische Differenz zwischen (i) einem Beitrag von Licht, das sich entlang eines inneren optischen Pfades ausbreitet, zu einem der Austrittslichtstrahlen und (ii) einer Strahlwertpartition, die mit diesem inneren optischen Pfad verknüpft ist, ist.

14. Vorrichtung nach Anspruch 13, wobei die Anzeigevorrichtung des Weiteren umfasst:
eine Leuchtschicht,
wobei sich die inneren optischen Pfade von der Leuchtschicht durch den einen oder die mehreren räumlichen Lichtmodulatoren hindurch erstrecken.

## Revendications

1. Procédé de rendu d'un champ lumineux, à l'aide d'un dispositif d'affichage (650) comprenant un ou plusieurs modulateurs spatiaux de lumière incluant des pixels de transparence régulable (654, 656, 658), dans lequel le dispositif d'affichage est configuré pour émettre des faisceaux lumineux de sortie de sorte que chacun des faisceaux lumineux de sortie soit formé par des contributions de lumières se propageant le long de trajets optiques internes correspondants, chacun des trajets optiques internes passe par au moins l'un des pixels de transparence régulable, le procédé comprenant :
la détermination de valeurs de faisceau cible pour chaque faisceau lumineux de sortie émis depuis le dispositif d'affichage ;
pour chacun des faisceaux lumineux de sortie, le partitionnement de la valeur de faisceau cible respective en partitions de valeur de faisceau, dans lequel chacune des partitions de valeur de faisceau est associée à l'un correspondant des trajets optiques internes ; et
la sélection de valeurs de transmittance pour les pixels de transparence régulable par l'ajustement itératif des valeurs de transmittance de sorte qu'une somme de termes d'erreur soit minimisée, chaque terme d'erreur étant une différence au carré entre (i) une contribution d'une lumière se propageant le long d'un trajet optique interne vers l'un des faisceaux lumineux de sortie et (ii) une partition de valeur de faisceau associée à ce trajet optique interne.

2. Procédé selon la revendication 1, dans lequel le terme d'erreur est représenté par : ${\left({L}_{i , p}-{d}_{i , p}{L}_{i}^{cible}\right)}^{2} ,$
dans lequel *L*_{*i*,*p*} est une contribution à un faisceau lumineux de sortie *i* par un trajet optique interne p,
dans lequel ${L}_{i}^{cible}$ est une valeur de faisceau cible pour un faisceau lumineux de sortie *i*, et
dans lequel ${d}_{i , p} {L}_{i}^{cible}$ est une partition de valeur de faisceau associée à un trajet optique interne *p* qui contribue à un faisceau lumineux de sortie *i.*

3. Procédé selon la revendication 2, dans lequel *L*_{*i*,*p*} est un produit de facteurs comprenant une constante de force de contribution *c*_{*i*,*p*} et au moins une valeur de transmittance d'au moins un pixel de transparence régulable situé sur le trajet optique p.

4. Procédé selon la revendication 1, dans lequel la sélection de valeurs de transmittance comprend la sélection de valeurs de transmittance pour minimiser la valeur de l'expression suivante : ${\sum }_{i = 1}^{I} {\sum }_{p = 1}^{P} {W}_{i} {C}_{i , p}^{2} {\left(\frac{1}{M}{\sum }_{m = 1}^{M} {\sum }_{n = 1}^{N} {T}_{n , m , f \left(n, p, i\right)} - \frac{{d}_{i , p}}{{c}_{i , p}} {L}_{i}^{cible}\right)}^{2}$ dans lequel :
*i* est un indice sur des faisceaux lumineux de sortie ;
p est un indice sur des trajets optiques internes ;
*Wᵢ* est une pondération associée à un faisceau lumineux *i* respectif ;
*c*_{*i*,*p*} est une constante de force de contribution proportionnelle à une contribution d'un trajet optique interne *p* à un faisceau lumineux de sortie *i ;*
*M* est un nombre de trames multiplexées ;
*m* est un indice sur des trames multiplexées ;
*N* est un nombre de couches de pixels de transparence régulable ;
*n* est un indice sur des couches de pixels de transparence régulable ;
*f*(*n, p, i)* est un indice d'un pixel de transparence régulable dans une couche *n*, le pixel est situé le long d'un trajet optique interne *p* qui contribue à un faisceau lumineux de sortie *i* ;
*T*_{*n,m,f*(*n,p,i*)} est une valeur de transmittance d'un pixel de transparence régulable *f*(*n, p, i)* dans une couche *n* pendant une trame *m* multiplexée ;
*d*_{*i*,*p*} est une constante de partitionnement ; et
${L}_{i}^{cible}$est une valeur de faisceau cible pour un faisceau lumineux de sortie *i*.

5. Procédé selon la revendication 1, dans lequel la sélection de valeurs de transmittance comprend la sélection de valeurs de transmittance pour minimiser la valeur de l'expression suivante : ${\sum }_{i = 1}^{I} {{\sum }_{p = 1}^{P} {c}_{i , p}^{2} \left({\prod }_{n = 1}^{N} {T}_{n , f \left(n, p, i\right)} - \frac{{d}_{i , p}}{{c}_{i , p}} {L}_{i}^{cible}\right)}^{2} ,$ dans lequel :
*i* est un indice sur des faisceaux lumineux de sortie ;
*p* est un indice sur des trajets optiques internes ;
*c*_{*i*,*p*} est une constante de force de contribution proportionnelle à une contribution d'un trajet optique interne *p* à un faisceau lumineux de sortie *i ;*
*N* est un nombre de couches de pixels de transparence régulable ;
*n* est un indice sur des couches de pixels de transparence régulable ;
*f*(*n, p, i)* est un indice d'un pixel de transparence régulable dans une couche n, le pixel est situé le long d'un trajet optique interne *p* qui contribue à un faisceau lumineux de sortie *i* ;
*T*_{*n,f*(*n,p,i*)} est une valeur de transmittance d'un pixel de transparence régulable *f*(*n, p, i)* dans une couche *n* ;
*d*_{*i*,*p*} est une constante de partitionnement ; et
${L}_{i}^{cible}$ est une valeur de faisceau cible pour un faisceau lumineux de sortie *i.*

6. Procédé selon la revendication 1, dans lequel la sélection de valeurs de transmittance comprend la sélection de valeurs de transmittance pour minimiser la valeur de l'expression suivante : ${\sum }_{i = 1}^{I} {{\sum }_{p = 1}^{P} {W}_{i} {c}_{i , p}^{2} \left({\prod }_{n = 1}^{N} {T}_{n , f \left(n, p, i\right)} - \frac{{d}_{i , p}}{{c}_{i , p}} {L}_{i}^{cible}\right)}^{2} ,$ dans lequel :
*i* est un indice sur des faisceaux lumineux de sortie ;
p est un indice sur des trajets optiques internes ;
*Wᵢ* est une pondération associée à un faisceau lumineux *i* respectif ;
*c*_{*i*,*p*} est une constante de force de contribution proportionnelle à une contribution d'un trajet optique interne *p* à un faisceau lumineux de sortie *i ;*
*N* est un nombre de couches de pixels de transparence régulable ;
*n* est un indice sur des couches de pixels de transparence régulable ;
*f*(*n, p, i)* est un indice d'un pixel de transparence régulable dans une couche *n*, le pixel est situé le long d'un trajet optique interne *p* qui contribue à un faisceau lumineux de sortie *i* ;
*T*_{*n,f*(*n,p,i*)} est une valeur de transmittance d'un pixel de transparence régulable *f*(*n, p, i)* dans une couche *n* ;
*d*_{*i*,*p*} est une constante de partitionnement ; et
${L}_{i}^{cible}$ est une valeur de faisceau cible pour un faisceau lumineux de sortie *i.*

7. Procédé selon la revendication 1, dans lequel la sélection de valeurs de transmittance comprend la sélection de valeurs de transmittance pour minimiser la valeur de l'expression suivante : ${\sum }_{i = 1}^{I} {{\sum }_{p = 1}^{P} {c}_{i , p}^{2} \left(\frac{1}{M}{\sum }_{m = 1}^{M} {\prod }_{n = 1}^{N} {T}_{n , m , f \left(n, p, i\right)} - \frac{{d}_{i , p}}{{c}_{i , p}} {L}_{i}^{cible}\right)}^{2} ,$ dans lequel :
*i* est un indice sur des faisceaux lumineux de sortie ;
p est un indice sur des trajets optiques internes ;
*c*_{*i*,*p*} est une constante de force de contribution proportionnelle à une contribution d'un trajet optique interne *p* à un faisceau lumineux de sortie *i ;*
*M* est un nombre de trames multiplexées ;
*m* est un indice sur des trames multiplexées ;
*N* est un nombre de couches de pixels de transparence régulable ;
*n* est un indice sur des couches de pixels de transparence régulable ;
*f*(*n, p, i)* est un indice d'un pixel de transparence régulable dans une couche *n*, le pixel est situé le long d'un trajet optique interne *p* qui contribue à un faisceau lumineux de sortie *i* ;
*T*_{*n,m,f*(*n,p,i*)} est une valeur de transmittance d'un pixel de transparence régulable *f*(*n, p, i)* dans une couche *n* pendant une trame *m* multiplexée ;
*d*_{*i*,*p*} est une constante de partitionnement ; et
${L}_{i}^{cible}$ est une valeur de faisceau cible pour un faisceau lumineux de sortie *i*.

8. Procédé selon l'une quelconque des revendications 1 à 7, dans lequel la détermination de la valeur de faisceau cible pour le faisceau de lumière de sortie est basée sur des informations caractérisant un champ lumineux.

9. Procédé selon l'une quelconque des revendications 1 à 8, dans lequel la sélection des valeurs de transmittance est réalisée à l'aide d'une factorisation en tenseurs non négatifs (NTF).

10. Procédé selon l'une quelconque des revendications 4 à 9, dans lequel une valeur de chaque constante de partitionnement *d*_{*i*,*p*} est sélectionnée sur la base d'une constante de force de contribution *c*_{*i*,*p*} correspondante.

11. Procédé selon la revendication 10, dans lequel une valeur de chaque constante de partitionnement *d*_{*i*,*p*} est sélectionnée pour être proportionnelle à une constante de force de contribution *c*_{*i*,*p*} correspondante.

12. Procédé selon l'une quelconque des revendications 1 à 11, comprenant en outre, sur la base au moins en partie des partitions de valeur de faisceau, la sélection d'une sortie lumineuse pour au moins un élément d'émission de lumière à un début d'au moins l'un des trajets optiques internes.

13. Appareil de rendu d'un champ lumineux, comprenant :
un dispositif d'affichage comprenant un ou plusieurs modulateurs spatiaux de lumière incluant des pixels de transparence régulable, dans lequel le dispositif d'affichage est configuré pour émettre des faisceaux lumineux de sortie de sorte que chacun des faisceaux lumineux de sortie soit formé par des contributions de lumières se propageant le long de trajets optiques internes correspondants, chacun des trajets optiques internes passe par au moins l'un des pixels de transparence régulable ; et
un processeur configuré pour réaliser un rendu de champ lumineux à l'aide du dispositif d'affichage incluant au moins :
la détermination de valeurs de faisceau cible pour chaque faisceau lumineux de sortie émis depuis le dispositif d'affichage ;
pour chacun des faisceaux lumineux de sortie, le partitionnement de la valeur de faisceau cible respective en partitions de valeur de faisceau, dans lequel chacune des partitions de valeur de faisceau est associée à l'un correspondant des trajets optiques internes ; et
la sélection de valeurs de transmittance pour les pixels de transparence régulable par l'ajustement itératif des valeurs de transmittance de sorte qu'une somme de termes d'erreur soit minimisée, chaque terme d'erreur étant une différence au carré entre (i) une contribution d'une lumière se propageant le long d'un trajet optique interne vers l'un des faisceaux lumineux de sortie et (ii) une partition de valeur de faisceau associée à ce trajet optique interne.

14. Appareil selon la revendication 13, dans lequel le dispositif d'affichage comprend en outre :
une couche d'émission de lumière,
dans lequel les trajets optiques internes s'étendent depuis la couche d'émission de lumière à travers les un ou plusieurs modulateurs spatiaux de lumière.
